(19) Europäisches Patentamt / European Patent Office / Office européen des brevets

(11) **EP 2 958 212 B1**

(12) **EUROPEAN PATENT SPECIFICATION**

(45) Date of publication and mention
of the grant of the patent:
**30.08.2017 Bulletin 2017/35**

(21) Application number: **13874989.0**

(22) Date of filing: **10.10.2013**

(51) Int Cl.:
*H01F 38/14* (2006.01)    *H02J 7/02* (2016.01)
*H02J 5/00* (2016.01)

(86) International application number:
**PCT/JP2013/077564**

(87) International publication number:
**WO 2014/125675 (21.08.2014 Gazette 2014/34)**

(54) **WIRELESS POWER TRANSMISSION DEVICE, SUPPLY POWER CONTROL METHOD FOR WIRELESS POWER TRANSMISSION DEVICE, AND METHOD FOR MANUFACTURING WIRELESS POWER TRANSMISSION DEVICE**

DRAHTLOSE STROMÜBERTRAGUNGSVORRICHTUNG, VERSORGUNGSSTROMSTEUERUNGSVERFAHREN FÜR DIE DRAHTLOSE STROMÜBERTRAGUNGSVORRICHTUNG UND VERFAHREN ZUR HERSTELLUNG DER DRAHTLOSEN STROMÜBERTRAGUNGSVORRICHTUNG

DISPOSITIF DE TRANSMISSION DE PUISSANCE SANS FIL, PROCÉDÉ DE COMMANDE DE PUISSANCE D'ALIMENTATION POUR UN DISPOSITIF DE TRANSMISSION DE PUISSANCE SANS FIL, ET PROCÉDÉ POUR FABRIQUER UN DISPOSITIF DE TRANSMISSION DE PUISSANCE SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.02.2013 JP 2013024636**

(43) Date of publication of application:
**23.12.2015 Bulletin 2015/52**

(73) Proprietor: **Nitto Denko Corporation
Ibaraki-shi, Osaka 567-8680 (JP)**

(72) Inventors:
• **HATANAKA, Takezo
Ibaraki-shi
Osaka 567-8680 (JP)**
• **TSUDA, Hisashi
Ibaraki-shi
Osaka 567-8680 (JP)**

(74) Representative: **Müller-Boré & Partner
Patentanwälte PartG mbB
Friedenheimer Brücke 21
80639 München (DE)**

(56) References cited:
WO-A2-2011/065732    JP-A- 2008 206 233
JP-A- 2011 120 450    JP-A- 2012 182 980
US-A1- 2010 244 580    US-A1- 2011 127 846
US-A1- 2012 146 424    US-A1- 2012 223 587

**Description**

TECHNICAL FIELD

The present invention relates to a wireless power transmission apparatus, a supply power control method for the wireless power transmission apparatus, and a manufacturing method of the wireless power transmission apparatus.

Background Art

Portable electronic devices such as laptop PCs, tablet PCs, digital cameras, mobile phones, portable gaming devices, earphone-type music players, RF headsets, hearing aids, recorders, which are portable while being used by the user are rapidly increasing in recent years. Many of these portable electronic devices have therein a rechargeable battery, which requires periodical charging. To facilitate the work for charging the rechargeable battery of an electronic device, there are an increasing number of devices for charging rechargeable batteries by using a power-supplying technology (wireless power transmission technology performing power transmission by varying the magnetic field) that performs wireless power transmission between a power-supplying device and a power-receiving device mounted in an electronic device.

For example, as a wireless power transmission technology, there have been known, for example, a technology that performs power transmission by means of electromagnetic induction between coils (e.g. see PTL 1), a technology that performs power transmission by means of resonance phenomenon (magnetic field resonant state) between resonators (coils) provided to the power-supplying device and the power-receiving device (e.g. see PTL 2).

To stably charge a rechargeable battery by using such a wireless power transmission technology, the value of the power (current) supplied to the rechargeable battery needs to be within a predetermined range. This is because, when the power (current) supplied to the rechargeable battery falls short of a value within the predetermined range, the power is a small power (small current) which is insufficient for charging the rechargeable battery due to the characteristics of the rechargeable battery. On the other hand, when the power (current) supplied to the rechargeable battery exceeds a value within the predetermined range, the power is an over current which causes heat generation in the rechargeable battery and the charging circuit, consequently shortening the life of the rechargeable battery and the charging circuit.

A conceivable approach to meet the above-described requirement is to control the power (current) to be supplied to the rechargeable battery so it falls within a predetermined range of values by controlling the input impedance in a power-supplying device and a power-receiving device in which wireless power transmission takes place.

To control the input impedance of the power-supplying device and the power-receiving device in which wireless power transmission takes place, it is conceivable to provide the power-receiving device with an impedance matching box separately. For example, in a contactless power supply system described in PTL 3, an automatic matching box 12 and an automatic matching box 23 (impedance adjusting means) are provided as means corresponding to the impedance matching box, thereby controlling the input impedance in the contactless power supply system (See FIG. 1 of PTL 3).

However, separately providing an impedance matching box causes an increase in the number of components, and is inconvenient in portable electronic devices for which portability, compactness, and cost-efficiency are required.

In view of the above, another approach is to control the input impedance by adjusting the capacity of the resistors, the capacitors, and the coils and the like provided in the power-supplying device and the power-receiving device in which wireless power transmission takes place.
Further, PTL 5 discloses a wireless power feeding technique in which power is fed from a feeding coil to a receiving coil by magnetic resonance. A VCO alternately turns ON/OFF switching transistors at a drive frequency, whereby AC power is fed to the feeding coil, and then the AC power is fed from the feeding coil to the receiving coil. A phase detection circuit detects a phase difference between the current phase and voltage phase, and the VCO adjusts the drive frequency such that the phase difference becomes zero. When load voltage is changed, the detected current phase value is adjusted with the result that the drive frequency is adjusted.
PTL 6 discloses a wireless power feeder that feeds power from a feeding coil to a receiving coil by wireless based on a magnetic field resonance phenomenon between the feeding coil and receiving coil. A power transmission control circuit supplies AC current at a drive frequency to the feeding coil. The feeding coil outputs AC power in substantially a non-resonant state with respect to circuit elements on the power feeding side. Then, power is supplied to a receiving coil circuit by a magnetic field resonance between the feeding coil and receiving coil.

Citation List

PATENT LITERATURES

PTL 1: Japanese patent No. 4624768
PTL 2: Japanese Unexamined Paten Publication No. 239769/2010
PTL 3: Japanese Unexamined Paten Publication No. 050140/2011
PTL 4: Japanese Unexamined Paten Publication No. 182975/2012
PTL 5: US 2011/127846 A1
PTL 6: US 2012/146424 A1

Summary of Invention

Technical Problem

As described in Background Art of PTL 3 (see paragraphs [0008] to [0010]) and in the specification of a wireless power transmission system in PTL 4, it is generally known that the power transmission efficiency of wireless power supply is maximized (see paragraph [0013] of PTL 4), by adjusting the resonance frequencies of resonators provided in the power-supplying device and the power-receiving device to the driving frequency of the power supplied to the power-supplying device (or adjusting the driving frequency to the resonance frequencies of the resonators provided in the power-supplying device and the power-receiving device). Such a setting is generally practiced to maximize the power transmission efficiency. Further, since the resonators of the power-supplying device and the power-receiving device each includes an LC resonance circuit, the resonance frequencies of the LC resonance circuits in the power-supplying device and the power-receiving device are naturally determined to a value that matches with the driving frequency (capacities of the capacitors and/or coils: resonance condition $\omega L = 1/\omega C$), in order to maximize the power transmission efficiency (see paragraph [0027] of PTL 4).

As described, to maximize the power transmission efficiency in the wireless power supply, the driving frequency of the power supplied to the power-supplying device is generally matched with the resonance frequency. However, this determines in advance the capacities of the capacitors, coils of the LC resonance circuits, and the capacities of the capacitors and the coils of the LC resonance circuits are not freely modifiable as the parameters for controlling the input impedance. In other words, the freedom in setting the capacities of the capacitors and coils of the LC resonance circuits is spoiled to control the input impedance. This also spoils the freedom in designing portable electronic devices for which the portability, compactness, and cost-efficiency.

In view of the above, it is an object of the present invention to provide a wireless power transmission apparatus, a supply power control method, and a manufacturing method for the wireless power transmission apparatus, which allows setting of the value of the input impedance by freely adjusting values including those of the capacities of the capacitors and coils provided in the power-supplying device and the power-receiving device in which wireless power transmission takes place, thus enabling control of the power (current) supplied.

Technical Solution

An aspect of the present invention to achieve the above object is a supply power control method for a wireless power transmission apparatus configured to supply power from a power-supplying module comprising at least one of a power-supplying coil and a power-supplying resonator to a power-power-receiving module comprising at least one of a power-receiving resonator and a power-receiving coil, while varying a magnetic field, wherein the power is supplied with a value such that a driving frequency of the power supplied to the power-supplying module does not match with the resonance frequencies of the power-supplying module and the power-receiving module, element values of a plurality of circuit elements constituting the power-supplying module and the power-receiving module are used as parameters, and the power supplied is adjusted by varying the parameters to set an input impedance Zin of the wireless power transmission apparatus.

In the above method, the driving frequency of the power supplied to the power-supplying module is made different from the resonance frequencies of the power-supplying module and the power-receiving module. This enables modification of element values of the plurality of circuit elements constituting the power-supplying module and a power-receiving module, freely as parameters for changing the input impedance Zin of the wireless power transmission apparatus. By changing each of the parameters, the input impedance Zin of the wireless power transmission apparatus is set to adjust the power to be supplied. As described, it is possible to freely set element values of the plurality of circuit elements constituting the power-supplying module and the power-receiving module, to control the input impedance Zin. This achieves a higher freedom in designing the wireless power transmission apparatus, and improves the portability, compactness, and cost-efficiency.

Another aspect of the present invention to achieve the above object is a supply power control method for a wireless power transmission apparatus configured to supply power from a power-supplying module comprising at least a power-supplying coil and a power-supplying resonator to a power-receiving module comprising at least a power-receiving resonator and a power-receiving coil, by means of a resonance phenomenon, wherein the power is supplied with a value such that a driving frequency of the power supplied to the power-supplying module does not match with the resonance frequencies of the power-supplying module and the power-receiving module, where a total impedance of a circuit element including a coil $L_1$ and constituting the power-supplying coil is $Z_1$, a total impedance of a circuit element including a coil $L_2$ and constituting the power-supplying resonator is $Z_2$. A total impedance of a circuit element including a coil $L_3$ and constituting the power-power-receiving resonator is $Z_3$. a total impedance of a circuit element including a coil $L_4$ and constituting the power-receiving coil is $Z_4$, a total load impedance of an electronic device receiving power from the power-receiving coil is $Z_1$, a mutual inductance between the coil $L_1$ of the power-supplying coil and the coil $L_2$ of the power-supplying resonator is $M_{12}$, a mutual inductance between the coil $L_2$ of the power-supplying resonator and the coil $L_3$ of the power-receiving resonator is $M_{23}$, and a mutual inductance between the coil $L_3$ of the power-receiving resonator and the coil $L_4$ of the power-receiving coil is $M_{34}$,

the element values of the plurality of circuit elements constituting the power-supplying coil, the power-supplying resonator, the power-receiving coil, and the power-receiving resonator, and the mutual inductances are used as the parameters, and are varied to control the input impedance $Z_{in}$ of the wireless power transmission apparatus, which is derived from the following equation, thereby to adjust the supplied power.

[Equation 1]

$$Z_{in} = Z_1 + \cfrac{(\omega M_{12})^2}{Z_2 + \cfrac{(\omega M_{23})^2}{Z_3 + \cfrac{(\omega M_{34})^2}{Z_4 + Z_L}}}$$

$$M_{12} = k_{12}\sqrt{L_1 L_2} \qquad M_{23} = k_{23}\sqrt{L_2 L_3} \qquad M_{34} = k_{34}\sqrt{L_3 L_4}$$

($k_{ij}$ is a coupling coefficient between $L_i$ and $L_j$)

The above method brings about the following advantage in relation to a supply power control method for a wireless power transmission apparatus configured to supply power from a power-supplying module comprising at least a power-supplying coil and a power-supplying resonator to a power-power-receiving module comprising at least a power-receiving resonator and a power-receiving coil, by means of a resonance phenomenon. Namely, by changing each of the parameters, the input impedance Zin of the wireless power transmission apparatus is set to adjust the power to be supplied. As described, it is possible to freely set element values of the plurality of circuit elements constituting the power-supplying module and the power-receiving module, to control the input impedance $Z_{in}$. This achieves a higher freedom in designing the wireless power transmission apparatus, and improves the portability, compactness, and cost-efficiency.

Another aspect of the present invention to achieve the above object is the supply power control method for a wireless power transmission apparatus, the method adapted so that the element values of a plurality of circuit elements constituting the power-supplying module and the power-receiving module and the mutual inductances are used as parameters, and the parameters are varied to set a value of transmission characteristic relative to a driving frequency of the power supplied to the power-supplying module, so that the characteristic has peaks in a lower drive frequency band and a higher drive frequency band than a resonance frequency.

In the above method, the parameters are varied to set a value of transmission characteristic relative to a drive frequency of the power supplied to the power-supplying module, so that the characteristic has peaks in a lower drive frequency band and a higher driving frequency band than a resonance frequency (double-hump characteristic described hereinbelow). The wireless power transmission apparatus with the double-hump characteristic provides a broader variation range of the input impedance $Z_{in}$, than a wireless power transmission apparatus in which the value of the transmission characteristic with respect to the driving frequency of the power supplied to the power-supplying module has one peak in the resonance frequency band (one with the later-described single-hump characteristic). Broadening the variation range of the input impedance Zin means that it is possible to set, within a wide range, the parameters, i.e., the element values of the plurality of circuit elements constituting the power-supplying module and the power-receiving module and the mutual inductances, as compared with a case of a single-hump characteristic. This improves the freedom in designing a wireless power transmission apparatus, and improves the portability, compactness, and cost-efficiency.

Another aspect of the present invention to achieve the above object is the supply power control method for a wireless power transmission apparatus, the method adapted so that the driving frequency of the power supplied to the power-supplying module is in a band corresponding to a peak value of the transmission characteristic occurring in a driving frequency band lower than the resonance frequency.

The above method ensures a certain level of high transmission characteristic even when the transmission characteristic has the double-hump characteristic, although the transmission characteristic is not as high as that ensured by matching the driving frequency with the resonance frequency in cases where the transmission characteristic has a single-hump characteristic. By setting the power-source frequency of the power source to a frequency on the low frequency side, the current in the power-supplying resonator and the current in the power-receiving resonator flow in the same direction. With this, as the magnetic field occurring on the outer circumference side of the power-supplying module and the magnetic field occurring on the outer circumference side of the power-receiving module cancel each other out, the influence of the magnetic fields on the outer circumference sides of the power-supplying module and the power-receiving module is restrained, and the magnetic field space having a smaller magnetic field strength than a magnetic field strength in positions other than the outer circumference sides of the power-supplying module and the power-receiving module is formed. By placing, within the magnetic field space, circuits and the like which should be away from the influence of the magnetic field, it is possible to efficiently utilize a space, and downsize the wireless power transmission apparatus itself.

Another aspect of the present invention to achieve the above object is the supply power control method for a wireless power transmission apparatus, the method adapted so that the driving frequency of the power supplied to the power-supplying module is in a band corresponding to a peak value of the transmission characteristic occurring in a driving frequency band higher than the resonance frequency.

The above method ensures a certain level of high transmission characteristic even when the transmission characteristic has the double-hump characteristic, although the transmission characteristic is not as high as that ensured by matching the driving frequency with the resonance frequency in cases where the transmission characteristic has a single-hump characteristic. Further, as the magnetic field occurring on the inner circumference side of the power-supplying module and the magnetic field occurring on the inner circumference side of the power-receiving module cancel each other out, the influence of the magnetic fields on the inner circumference sides of the power-supplying module and the power-receiving module is restrained, and the magnetic field space having a smaller magnetic field strength than a magnetic field strength in positions other than the inner circumference sides of the power-supplying module and the power-receiving module is formed. By placing, within the magnetic field space, circuits and the like which should be away from the influence of the magnetic field, it is possible to efficiently utilize a space, and downsize the wireless power transmission apparatus itself.

Another aspect of the present invention is a wireless power transmission apparatus adjusted by the above-described supply power control method for a wireless power transmission apparatus.

With the above structure, it is possible to freely set the parameters, i.e. , the element values of the plurality of circuit elements constituting the power-supplying module and the power-receiving module, for the purpose of controlling the input impedance. This improves the freedom in designing of the wireless power transmission apparatus, and improves the portability, compactness, and cost-efficiency of the wireless power transmission apparatus itself.

Another aspect of the present invention to achieve the above object is a manufacturing method for a wireless power transmission apparatus configured to supply power from a power-supplying module comprising at least one of a power-supplying coil and a power-supplying resonator to a power-receiving module comprising at least one of a power-receiving resonator and a power-receiving coil in such a manner that the driving frequency of the power supplied does not match with a resonance frequency in the power-supplying module and the power-receiving module, while varying a magnetic field, the method comprising a design process of adjusting power supplied by the wireless power transmission apparatus, by varying, as parameters, the element values of a plurality of circuit elements constituting the power-supplying module and the power-receiving module, to control the input impedance (Zin) of the wireless power transmission apparatus.

With the above method, it is possible to freely set element values of the plurality of circuit elements constituting the power-supplying module and the power-receiving module, to control the input impedance. This enables a higher freedom in designing the wireless power transmission apparatus, and allows manufacturing of a wireless power transmission apparatus with improved portability, compactness, and cost-efficiency.

Advantageous Effects

There is provided a wireless power transmission apparatus, a supply power control method, and a manufacturing method for the wireless power transmission apparatus, which allows setting of the value of the input impedance by freely adjusting values including those of the capacities of the capacitors and coils provided in the power-supplying device and the power-receiving device in which wireless power transmission takes place, thus enabling control of the power (current) supplied.

Brief Description of Drawings

[FIG. 1] FIG. 1 is a schematic explanatory diagram of a wireless power transmission apparatus.

[FIG. 2] FIG. 2 is an explanatory diagram of a proper current range.

[FIG. 3] FIG. 3 is an explanatory diagram of an equivalent circuit of the wireless power transmission apparatus.

[FIG. 4] FIG. 4 is an explanatory diagram indicating relation of transmission characteristic "S21" to a driving frequency.

[FIG. 5] FIG. 5 is a schematic explanatory diagram of a wireless power transmission apparatus used in measurement test 1.

[FIG. 6] FIG. 6 is a table showing measurement results of a variation range of the input impedance, when the transmission characteristic S21 has a single-hump characteristic, in relation to comparative example of measurement test 1.

[FIG. 7] FIG. 7 is a table showing measurement results of a variation range of the input impedance, when the transmission characteristic S21 has a double-hump characteristic, in relation to an example of measurement test 1.

[FIG. 8] FIG. 8 is a table showing measurement results of a variation range of the input impedance $Z_{in}$ of the wireless power transmission apparatus, when the transmission characteristic S21 in the measurement test 1 has a double-hump characteristic, and when the transmission characteristic S21 is set to - 2.2 dB, and to 2.8 dB.

[FIG. 9] FIG. 9 is an explanatory diagram of an equivalent circuit of the wireless power transmission apparatus used in measurement test 2.

[FIG. 10] FIG. 10 is a table showing measurement results of a variation range of the input impedance, when the transmission characteristic S21 has a single-hump characteristic, in relation to comparative example of measurement test 2.

[FIG. 11] FIG. 11 is a table showing measurement results of a variation range of the input impedance, when the transmission characteristic S21 has a double-hump characteristic, in relation to an example of measurement test 2.

[FIG. 12] FIG. 12 is a table showing measurement results of a variation range of the input impedance Zin of the wireless power transmission apparatus, when the transmission characteristic S21 in the measurement test 2 has a double-hump characteristic, and when the transmission characteristic S21 is set to - 2.0 dB, and to 2.7 dB.

[FIG. 13] FIG. 13 is an explanatory diagram of a manufacturing method of a wireless power transmission apparatus.

[FIG. 14] FIG. 14 is a flowchart explaining a method for designing an RF headset and a charger, including the wireless power transmission apparatus.

DESCRIPTION OF EMBODIMENTS

The following describes an embodiment of a wireless power transmission apparatus, a supply power control method and a manufacturing method for the wireless power transmission apparatus related to the present invention.

(Embodiment)

First, the following describes a wireless power transmission apparatus 1 designed and manufactured by the supply power control method and the manufacturing method, before describing the supply power control method and the manufacturing method themselves for the wireless power transmission apparatus.

(Structure of Wireless Power Transmission Apparatus 1)

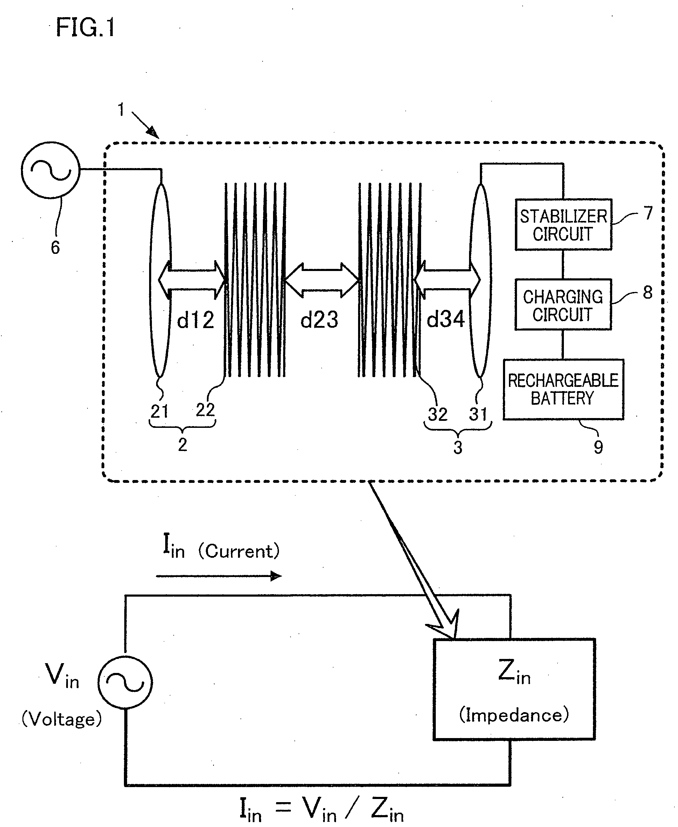

The wireless power transmission apparatus 1 includes: a power-supplying module 2 having a power-supplying coil 21 and a power-supplying resonator 22; and a power-receiving module 3 having a power-receiving coil 31 and the power-receiving resonator 32, as shown in FIG. 1. The power-supplying coil 21 of the power-supplying module 2 is connected to an AC power source 6 having an oscillation circuit configured to set the driving frequency of power supplied to the power-supplying module 2 to a predetermined value. The power-receiving coil 31 of the power-receiving module 3 is connected to a rechargeable battery 9 via a charging circuit 8 configured to prevent overcharge and a stabilizer circuit 7 configured to rectify the AC power received.

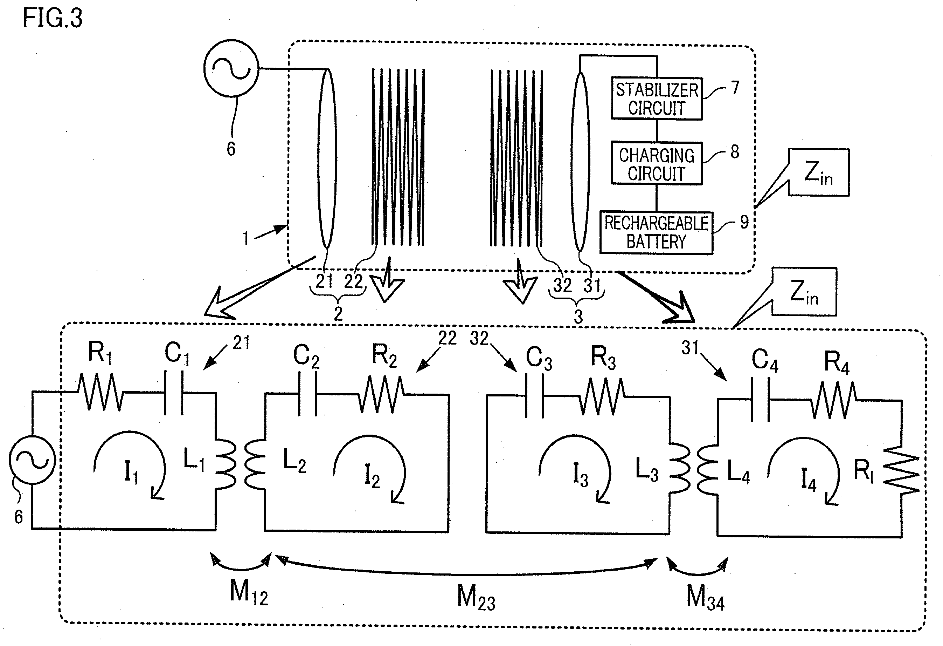

The power-supplying coil 21 plays a role of supplying power obtained from the AC power source 6 to the power-supplying resonator 22 by means of electromagnetic induction. As shown in FIG. 3, the power-supplying coil 21 is constituted by an RLC circuit whose elements include a resistor $R_1$, a coil $L_1$, and a capacitor $C_1$. The coil $L_1$ is formed by winding once a copper wire material (coated by an insulation film) with its coil diameter set to 96mm$\varphi$. The total impedance of a circuit element constituting the power-supplying coil 21 is $Z_1$. In the present embodiment, the $Z_1$ is the total impedance of the RLC circuit (circuit element) constituting the power-supplying coil 21, which includes the resistor

$R_1$, the coil $L_1$, and the capacitor $C_1$.

The power-receiving coil 31 plays roles of receiving the power having been transmitted as a magnetic field energy from the power-supplying resonator 22 to the power-receiving resonator 32, by means of electromagnetic induction, and supplying the power received to the rechargeable battery 9 via the stabilizer circuit 7 and the charging circuit 8. As shown in FIG. 3, the power-receiving coil 31, similarly to the power-supplying coil 21, is constituted by an RLC circuit whose elements include a resistor $R_4$, a coil $L_4$, and a capacitor $C_4$. The coil $L_4$ is formed by winding once a copper wire material (coated by an insulation film) with its coil diameter set to 96 mmφ. The total impedance of a circuit element constituting the power-receiving coil 31 is $Z_4$. In the present embodiment, the $Z_4$ is the total impedance of the RLC circuit (circuit element) constituting the power-receiving coil 31, which includes the resistor $R_4$, the coil $L_4$, and the capacitor $C_4$. Further, as shown in FIG. 3, the load resistances of the stabilizer circuit 7, the charging circuit 8, and the rechargeable battery 9 connected to the power-receiving coil 31 are collectively a resistor $R_1$ (i.e., the value of the resistor $R_1$ is a total load resistance of devices connected to the wireless power transmission apparatus 1) for the sake of convenience. A total load impedance of electronic devices (stabilizer circuit 7, charging circuit 8, and rechargeable battery 9 in the present embodiment) receiving power from the power-receiving coil 31 is $Z_1$.

As shown in FIG. 3, the power-supplying resonator 22 is constituted by an RLC circuit whose elements include a resistor $R_2$, a coil $L_2$, and a capacitor $C_2$. Further, as shown in FIG. 3, the power-receiving resonator 32 is constituted by an RLC circuit whose elements include a resistor $R_3$, a coil $L_3$, and a capacitor $C_3$. The power-supplying resonator 22 and the power-receiving resonator 32 each serves as a resonance circuit and plays a role of creating a magnetic field resonant state. The magnetic field resonant state (resonance phenomenon) here is a phenomenon in which two or more coils are tuned to a resonance frequency. The total impedance of a circuit element constituting the power-supplying resonator 22 is $Z_2$. In the present embodiment, the $Z_2$ is the total impedance of the RLC circuit (circuit element) constituting the power-supplying resonator 22, which includes the resistor $R_2$, the coil $L_2$, and the capacitor $C_2$. The total impedance of a circuit element constituting the power-receiving resonator 32 is $Z_3$. In the present embodiment, the $Z_3$ is the total impedance of the RLC circuit (circuit element) constituting the power-receiving resonator 32, which includes the resistor $R_3$, the coil $L_3$, and the capacitor $C_3$.

In the RLC circuit which is the resonance circuit in each of the power-supplying resonator 22 and the power-receiving resonator 32, the resonance frequency is f which is derived from (Formula 1) below, where the inductance is L and the capacity of capacitor is C. In the present embodiment, the resonance frequency of the power-supplying coil 21, the power-supplying resonator 22, the power-receiving coil 31, and the power-receiving resonator 32 is set to 12.8 MHz.

[Equation 2]

$$ f = \frac{1}{2\pi\sqrt{LC}} \ldots\ldots \text{(Formula 1)} $$

The power-supplying resonator 22 and the power-receiving resonator 32 are each a solenoid coil formed by winding four times a copper wire material (coated by insulation film), with its coil diameter being 96 mmφ. The resonance frequency of the power-supplying resonator 22 and that of the power-receiving resonator 32 are matched with each other. The power-supplying resonator 22 and the power-receiving resonator 32 may be a spiral coil or a solenoid coil as long as it is a resonator using a coil.

In regard to the above, the distance between the power-supplying coil 21 and the power-supplying resonator 22 is denoted as d12, the distance between the power-supplying resonator 22 and the power-receiving resonator 32 is denoted as d23, and the distance between the power-receiving resonator 32 and the power-receiving coil 31 is denoted as d34 (see FIG. 1).

Further, as shown in FIG. 3, a mutual inductance between the coil $L_1$ of the power-supplying coil 21 and the coil $L_2$ of the power-supplying resonator 22 is $M_{12}$, a mutual inductance between the coil $L_2$ of the power-supplying resonator 22 and the coil $L_3$ of the power-receiving resonator 32 is $M_{23}$, and a mutual inductance between the coil $L_3$ of the power-receiving resonator 32 and the coil $L_4$ of the power-receiving coil 31 is $M_{34}$. Further, in regard to the wireless power transmission apparatus 1, a coupling coefficient between the coil $L_1$ and the coil $L_2$ is denoted as $K_{12}$, a coupling coefficient between the coil $L_2$ and the coil $L_3$ is denoted as $K_{23}$, a coupling coefficient between the coil $L_3$ and the coil $L_4$ is denoted as $K_{34}$

The resistance values, inductances, capacities of capacitors, and coupling coefficients $K_{12}$, $K_{23}$, and $K_{34}$ of $R_1$, $L_1$, and $C_1$ of the RLC circuit of the power-supplying coil 21, $R_2$, $L_2$, and $C_2$ of the RLC circuit of the power-supplying resonator 22, $R_3$, $L_3$, and $C_3$ of the RLC circuit of the power-receiving resonator 32, and $R_4$, $L_4$, and $C_4$ of the RLC circuit of the power-receiving coil 31 are parameters variable at the stage of designing and manufacturing, and are preferably set so as to satisfy the relational expression of (Formula 3) which is described later.

With the wireless power transmission apparatus 1, when the resonance frequency of the power-supplying resonator 22 and the resonance frequency of the power-receiving resonator 32 match with each other, a magnetic field resonant state is created between the power-supplying resonator 22 and the power-receiving resonator 32. When a magnetic field resonant state is created between the power-supplying resonator 22 and the power-receiving resonator 32 by having these resonators resonating with each other, power is transmitted from the power-supplying resonator 22 to the power-receiving resonator 32 as magnetic field energy.

(Supply Power Control Method)

The following describes a supply power control method for adjusting the power supplied from the wireless power transmission apparatus 1, based on the structure of the wireless power transmission apparatus 1.

FIG. 1 shows at its bottom a circuit diagram of the wireless power transmission apparatus 1 (including: the stabilizer circuit 7, the charging circuit 8, and the rechargeable battery 9) having the structure as described above. In the figure, the entire wireless power transmission apparatus 1 is shown as a single input impedance Zin. When the AC power source 6 generally used is a constant voltage power source, the voltage Vin is kept constant. Therefore, to control the power output from the wireless power transmission apparatus 1, there is a need of controlling the current $I_{in}$.

The (Formula 2) is a relational expression of the current $I_{in}$, based on the voltage Vin and input impedance $Z_{in}$.

[Equation 3]

$$I_{in} = \frac{V_{in}}{Z_{in}}$$

$$\ldots\ldots \text{(Formula 2)}$$

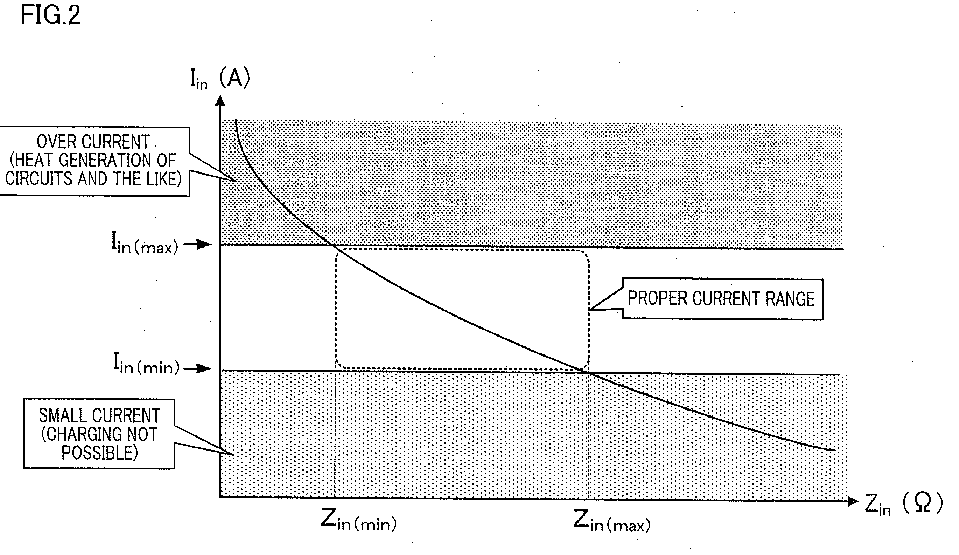

When supplying power from the wireless power transmission apparatus 1 of the present embodiment to the rechargeable battery 9, the value of the current $I_{in}$ needs to be within a proper current range ($I_{in\,(MIN)}$ to $I_{in\,(max)}$), as shown in FIG. 2. The current $I_{in}$ needs to be a value within the proper current range because of the following reasons. The current supplied to the rechargeable battery 9 is a small current when the value thereof is smaller than the $I_{in(MIN)}$, and could fail to charge the rechargeable battery 9, depending on the characteristics of the rechargeable battery. The current supplied to the rechargeable battery 9 is an over current, when the value thereof is greater than the $I_{in\,(MAX)}$, which may lead to heat generation in the stabilizer circuit 7, charging circuit 8, and rechargeable battery 9, consequently shortening their lives.

To control the current $I_{in}$ to be within the proper current range ($I_{in\,(MIN)}$ to $I_{in\,(max)}$) for the reasons stated above, the value of the input impedance Zin needs to be adjusted to be within a range of $Z_{in\,(MIN)}$ to $Z_{in\,(MAX)}$, as shown in FIG. 2. That is, as should be understood from (Formula 2), the value of the current $I_{in}$ is reduced by increasing the value of the input impedance Zin, and the value of the current $I_{in}$ is increased by reducing the input impedance $Z_{in}$.

To be more specific about the input impedance $Z_{in}$ of the wireless power transmission apparatus 1, the structure of the wireless power transmission apparatus 1 is expressed in an equivalent circuit as shown in FIG. 3. Based on the equivalent circuit in FIG. 3, the input impedance $Z_{in}$ of the wireless power transmission apparatus 1 is expressed as the (Formula 3).

[Equation 4]

$$Z_{in} = Z_1 + \cfrac{(\omega M_{12})^2}{Z_2 + \cfrac{(\omega M_{23})^2}{Z_3 + \cfrac{(\omega M_{34})^2}{Z_4 + Z_L}}}$$

$$M_{12} = k_{12}\sqrt{L_1 L_2} \qquad M_{23} = k_{23}\sqrt{L_2 L_3} \qquad M_{34} = k_{34}\sqrt{L_3 L_4}$$

($k_{ij}$ is a coupling coefficient between $L_i$ and $L_j$)

..... (Formula 3)

Further, the impedance $Z_1$, $Z_2$, $Z_3$, $Z_4$, and $Z_L$ of the power-supplying coil 21, the power-supplying resonator 22, the power-receiving resonator 32, and the power-receiving coil 31 in the wireless power transmission apparatus 1 of the present embodiment are expressed as the (Formula 4).

[Equation 5]

$$Z_1 = R_1 + j\left(\omega L_1 - \frac{1}{\omega C_1}\right)$$

$$Z_2 = R_2 + j\left(\omega L_2 - \frac{1}{\omega C_2}\right)$$

$$Z_3 = R_3 + j\left(\omega L_3 - \frac{1}{\omega C_3}\right)$$

$$Z_4 = R_4 + j\left(\omega L_4 - \frac{1}{\omega C_4}\right)$$

$$Z_l = R_l$$

..... (Formula 4)

Introducing the (Formula 4) into the (Formula 3) makes the (Formula 5).

[Equation 6]

$$Z_{in} = R_1 + j\left(\omega L_1 - \frac{1}{\omega C_1}\right) + \cfrac{(\omega M_{12})^2}{R_2 + j\left(\omega L_2 - \frac{1}{\omega C_2}\right) + \cfrac{(\omega M_{23})^2}{R_3 + j\left(\omega L_3 - \frac{1}{\omega C_3}\right) + \cfrac{(\omega M_{34})^2}{R_4 + j\left(\omega L_4 - \frac{1}{\omega C_4}\right) + R_l}}}$$

..... (Formula 5)

The resistance values, inductances, capacities of capacitors, and coupling coefficients $K_{12}$, $K_{23}$, and $K_{34}$ of $R_1$,

$L_1$, and $C_1$ of the RLC circuit of the power-supplying coil 21, $R_2$, $L_2$, and $C_2$ of the RLC circuit of the power-supplying resonator 22, $R_3$, $L_3$, and $C_3$ of the RLC circuit of the power-receiving resonator 32, $R_4$, $L_4$, and $C_4$ of the RLC circuit of the power-receiving coil 31 are used as parameters variable at the stage of designing and manufacturing, to adjust the value of the input impedance $Z_{in}$ of the wireless power transmission apparatus 1 derived from the above (Formula 5) to fall within the range of $Z_{in\ (MIN)}$ to $Z_{in\ (MAX)}$.

It is generally known that, in the above described wireless power transmission apparatus, the power transmission efficiency of the wireless power transmission is maximized by matching the driving frequency of the power supplied to the power-supplying module 2 to the resonance frequencies of the power-supplying coil 21 and the power-supplying resonator 22 of the power-supplying module 2 and the power-receiving coil 31 and the power-receiving resonator 32 of the power-receiving module 3. The driving frequency is therefore set to the resonance frequency generally to maximize the power transmission efficiency. It should be noted that the power transmission efficiency is a rate of power received by the power-receiving module 3, relative to the power supplied to the power-supplying module 2.

Thus, to maximize the power transmission efficiency in the wireless power transmission apparatus 1, it is necessary to satisfy capacity conditions and resonance conditions of the capacitors and coils ($\omega L=1/\omega C$) so that the driving frequency matches with the resonance frequencies of the RLC circuits of the power-supplying module 2 and the power-receiving module 3.

Specifically, when the input impedance Zin of the wireless power transmission apparatus 1 satisfying the resonance condition ($\omega L = 1/\omega C$) which maximizes the power transmission efficiency in the wireless power transmission apparatus 1 to the (Formula 5), ($\omega L1 - 1/\omega C1=0$), ($\omega L2-1/\omega C2=0$), ($\omega L3-1/\omega C3=0$), and ($\omega L4-1/\omega C4= 0$), and therefore the relational expression (Formula 6) is derived.

[Equation 7]

$$Z_{in} = R_1 + \cfrac{(\omega M_{12})^2}{R_2 + \cfrac{(\omega M_{23})^2}{R_3 + \cfrac{(\omega M_{34})^2}{R_4 + R_1}}}$$

..... (Formula 6)

From the above relational expression (Formula 6), it should be under stood that the resistance values such as $R_1$ of the RLC circuit of the power-supplying coil 21, $R_2$ of the RLC circuit of the power-supplying resonator 22, $R_3$ of the RLC circuit of the power-receiving resonator 32, $R_4$ of the RLC circuit of the power-receiving coil 31, and the coupling coefficients $K_{12}$, $K_{23}$, and $K_{34}$ are only the main variable parameters to adjust the value of the input impedance Zin of the wireless power transmission apparatus 1 within the range of $Z_{in\ (MIN)}$ to $Z_{in\ (MAX)}$.

When the driving frequency of the power supplied to the power-supplying module 2 is matched with the resonance frequency to maximize the power transmission efficiency in the wireless power transmission apparatus 1, the capacities of the capacitors and the coils of the power-supplying module 2 and the power-receiving module 3 are determined in advance, and it will be only the resistance values of the RLC circuits which mainly enables control of the value of the input impedance $Z_{in}$. This means that the capacities of the capacitors and coils of the RLC circuits are not freely modifiable as the parameters for controlling the input impedance Zin, which leads to a lower freedom in designing of the wireless power transmission apparatus 1.

On the other hand, by setting the driving frequency of the power supplied to the power-supplying module 2 different from the resonance frequencies of the power-supplying resonator 22 of the power-supplying module 2 and the power-receiving resonator 32 of the power-receiving module 3 (i.e. $\omega L \neq 1/\omega C$), the wireless power transmission apparatus 1 of the present embodiment allows to use, as variable parameters for controlling the input impedance Zin , the resistance values, inductances, capacities of capacitors, and coupling coefficients $K_{12}$, $K_{23}$, and $K_{34}$ of $R_1$, $L_1$, and $C_1$ of the RLC circuit of the power-supplying coil 21, $R_2$, $L_2$, and $C_2$ of the RLC circuit of the power-supplying resonator 22, $R_3$, $L_3$, and $C_3$ of the RLC circuit of the power-receiving resonator 32, and $R_4$, $L_4$, and $C_4$ of the RLC circuit of the power-receiving coil 31 and the like.

This, when structuring the wireless power transmission apparatus 1, allows the parameters to be varied and balanced for adjusting the value of the input impedance $Z_{in}$ to be within the range of $Z_{in\ (MIN)}$ to $Z_{in\ (MAX)}$, for the purpose of controlling the $I_{in}$ in the proper current range ($I_{in\ (MIN)}$ to $I_{in\ (max)}$), the parameters being: the resistance values, inductances, capacities of capacitors, and coupling coefficients $K_{12}$, $K_{23}$, and $K_{34}$ of $R_1$, $L_1$, and $C_1$ of the power-supplying coil

21, $R_2$, $L_2$, and $C_2$ of the power-supplying resonator 22, $R_3$, $L_3$, and $C_3$ of the power-receiving resonator 32, and $R_4$, $L_4$, and $C_4$ of the power-power-receiving coil 31. Therefore, it is possible to achieve a higher freedom in designing of the wireless power transmission apparatus 1, and achieve an arrangement that suits the volume, shape, and total weight of the wireless power transmission apparatus 1. That is, when compared with a typical wireless power transmission apparatus 1 in which the power transmission efficiency is maximized, the above structure increases the number of parameters for adjusting the values of the input impedance $Z_{in}$, and enables delicate control of the value of the input impedance Zin of the wireless power transmission apparatus 1.

Thus, it is possible to realize a supply power control method which allows adjustment of the power supplied in the wireless power transmission apparatus 1 by balancing the parameters with one another to control the input impedance $Z_{in}$ derived from (Formula 3), the parameters being: the resistance values, inductances, the capacities of capacitors, and coupling coefficients $K_{12}$, $K_{23}$, and $K_{34}$ of $R_1$, $L_1$, and $C_1$ of the power-supplying coil 21, $R_2$, $L_2$. and $C_2$ of the power-supplying resonator 22, $R_3$, $L_3$, and $C_3$ of the power-power-receiving resonator 32, and $R_4$, $L_4$, and $C_4$ of the power-receiving coil 31.

Therefore, with the above method, by making the driving frequency of the power supplied to the power-supplying module 2 different from the resonance frequency of the power-supplying module 2 (power-supplying coil 21, power-supplying resonator 22) and the power-receiving module 3 (power-power-receiving coil 31, power-supplying resonator 32), element values of the circuit elements constituting the power-supplying module 2 and the power-receiving module 3 (i.e., resistance values, inductances, capacities of capacitors, and coupling coefficients $K_{12}$, $K_{23}$, and $K_{34}$ of $R_1$, $L_1$, and $C_1$ of the power-supplying coil 21, $R_2$, $L_2$, and $C_2$ of the power-supplying resonator 22, $R_3$, $L_3$, and $C_3$ of the power-power-receiving resonator 32, and $R_4$, $L_4$, and $C_4$ of the power-power-receiving coil 31) are freely modifiable as parameters for changing the input impedance Zin of the wireless power transmission apparatus 1. By changing each of the parameters to satisfy the above relational expression, the input impedance $Z_{in}$ of the wireless power transmission apparatus 1 is set to adjust the power to be supplied. As described, it is possible to freely set element values of the plurality of circuit elements constituting the power-supplying module 2 and the power-receiving module 3, to control the input impedance $Z_{in}$. This achieves a higher freedom in designing the wireless power transmission apparatus 1, and improves the portability, compactness, and cost-efficiency.

Further, a wireless power transmission apparatus 1 adopting the above supply power control method for adjustment improves the freedom in setting of parameters for changing the input impedance Zin, the parameters being element values of the circuit elements constituting the power-supplying module 2 and the power-receiving module 3 (i.e., resistance values, inductances, capacities of capacitors, and coupling coefficients $K_{12}$, $K_{23}$, and $K_{34}$ of $R_1$, $L_1$, and $C_1$ of the power-supplying resonator 22, $R_3$, $L_3$, and $C_3$ of the power-power-receiving resonator 32, and $R_4$, $L_4$, and $C_4$ of the power-power-receiving coil 31). This improves the freedom in designing of the wireless power transmission apparatus 1, and improves the portability, compactness, and cost-efficiency of the wireless power transmission apparatus 1 itself.

(Variation Range of Input Impedance $Z_{in}$ when Transmission Characteristic has Double-Hump Characteristic/Single-Hump Characteristic)

Next, the following describes a variation range of the input impedance $Z_{in}$ when the transmission characteristic S21 of the wireless power transmission apparatus 1 has a single-hump characteristic (described later), and when the transmission characteristic S21 has a double-hump characteristic (described later). The transmission characteristic S21 is signals measured by a network analyzer 110 (in the present embodiment, E5061B produced by Agilent Technologies, Inc.) connected to the wireless power transmission apparatus 1, and is indicated in decibel. The greater the value, the higher the power transmission efficiency.

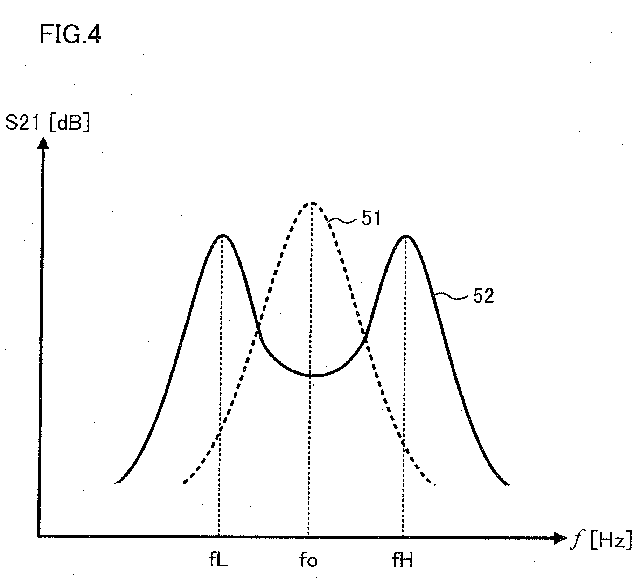

The transmission characteristic S21 of the wireless power transmission apparatus 1 relative to the driving frequency of the power supplied to the wireless power transmission apparatus 1 may have either single-hump or double-hump characteristic, depending on the strength of coupling (magnetic coupling) by the magnetic field between the power-supplying module 2 and the power-receiving module 3. The single-hump characteristic means the transmission characteristic "S21" relative to the driving frequency has a single peak which occurs in the resonance frequency band (f0) (See dotted line 51 FIG. 4). The double-hump characteristic on the other hand means the transmission characteristic S21 relative to the driving frequency has two peaks, one of the peaks occurring in a drive frequency band (fL) lower than the resonance frequency, and the other occurring in a drive frequency band (fH) higher than the resonance frequency (See solid line 52 in FIG. 4). The double-hump characteristic, to be more specific, means that the reflection characteristic "S11" measured with the network analyzer 110 connected to the wireless power transmission apparatus has two peaks. Therefore, even if the transmission characteristic S21 relative to the driving frequency appears to have a single peak, the transmission characteristic "S21" has a double-hump characteristic if the reflection characteristic S11 measured has two peaks.

In a wireless power transmission apparatus 1 having the single-hump characteristic, the transmission characteristic S21 is maximized (power transmission efficiency is maximized) when the driving frequency is at the resonance frequency f0, as indicated by the dotted line 51 of FIG. 4.

On the other hand, in a wireless power transmission apparatus 1 having the double-hump characteristic, the transmission characteristic S21 is maximized in a drive frequency band (fL) lower than the resonance frequency f0, and in a driving frequency band (fH) higher than the resonance frequency f0, as indicated by the solid line 52 of FIG. 4.

It should be noted that, in general, if the distance between a power-supplying resonator and a power-receiving resonator is the same, the maximum value of the transmission characteristic S21 having the double-hump characteristic (the value of the transmission characteristic S21 at fL or fH) is lower than the value of the maximum value of the transmission characteristic S21 having the single-hump characteristic (value of the transmission characteristic "S21" at f0) (See graph in FIG. 4). Therefore, a typical wireless power transmission apparatus aiming at maximizing the power transmission characteristic of the power is designed (set) so that the transmission characteristic S21 of the wireless power transmission apparatus has a single-hump characteristic, and is used in such a manner that the transmission characteristic S21 is maximized when the driving frequency is at the resonance frequency $f_0$.

Specifically, in cases of double-hump characteristic, when the driving frequency of the AC power to the power-supplying module 2 is set to the frequency fL nearby the peak on the low frequency side (inphase resonance mode), the power-supplying resonator 22 and the power-receiving resonator 32 are resonant with each other in inphase, and the current in the power-supplying resonator 22 and the current in the power-receiving resonator 32 both flow in the same direction. As the result, as shown in the graph of FIG. 4, the value of the transmission characteristic S21 is made relatively high, even if the driving frequency does not match with the resonance frequency of the power-supplying resonator 22 of the power-supplying module 2 and the power-receiving resonator 32 of the power-receiving module 3, although the value still may not be as high as that of the transmission characteristic S21 in wireless power transmission apparatuses in general aiming at maximizing the power transmission efficiency (see dotted line 51). Note that the resonance state in which the current in the coil (power-supplying resonator 22) of the power-supplying module 2 and the current in the coil (power-receiving resonator 32) of the power-receiving module 3 both flow in the same direction is referred to as inphase resonance mode.

Further, in the inphase resonance mode, because the magnetic field generated on the outer circumference side of the power-supplying resonator 22 and the magnetic field generated on the outer circumference side of the power-receiving resonator 32 cancel each other out, the magnetic field spaces each having a lower magnetic field strength than the magnetic field strengths in positions not on the outer circumference sides of the power-supplying resonator 22 and the power-receiving resonator 32 (e.g. , the magnetic field strengths on the inner circumference sides of the power-supplying resonator 22 and the power-receiving resonator 32) are formed on the outer circumference sides of the power-supplying resonator 22 and the power-receiving resonator 32, as the influence of the magnetic fields is lowered. When a stabilizer circuit 7, a charging circuit 8, a rechargeable battery 9, and the like desired to have less influence of the magnetic field is placed in this magnetic field space, occurrence of Eddy Current attributed to the magnetic field is restrained or prevented. This restrains negative effects due to generation of heat.

On the other hand, in cases of double-hump characteristic, when the driving frequency of the AC power to the power-supplying module 2 is set to the frequency fH nearby the peak on the side of the high frequency side (antiphase resonance mode), the power-supplying resonator 22 and the power-receiving resonator 32 resonate with each other in antiphase, and the current in the power-supplying resonator 22 and the current in the power-receiving resonator 32 flow opposite directions to each other. As the result, as shown in the graph of FIG. 4, the value of the transmission characteristic S21 is made relatively high, even if the driving frequency does not match with the resonance frequency of the power-supplying resonator 22 of the power-supplying module 2 and the power-receiving resonator 32 of the power-receiving module 3, although the value still may not be as high as that of the transmission characteristic S21 in wireless power transmission apparatuses in general aiming at maximizing the power transmission efficiency (see dotted line 51). The resonance state in which the current in the coil (power-supplying resonator 22) of the power-supplying module 2 and the current in the coil (power-receiving resonator 32) of the power-receiving module 3 flow opposite directions to each other is referred to as antiphase resonance mode.

Further, in the antiphase resonance mode, because the magnetic field generated on the inner circumference side of the power-supplying resonator 22 and the magnetic field generated on the inner circumference side of the power-receiving resonator 32 cancel each other out, the magnetic field spaces each having a lower magnetic field strength than the magnetic field strengths in positions not on the inner circumference side of the power-supplying resonator 22 and the power-receiving resonator 32 (e.g. , the magnetic field strengths on the outer circumference side of the power-supplying resonator 22 and the power-receiving resonator 32) are formed on the outer circumference sides of the power-supplying resonator 22 and the power-receiving resonator 32, as the influence of the magnetic fields is lowered. When a stabilizer circuit 7, a charging circuit 8, a rechargeable battery 9, and the like desired to have less influence of the magnetic field is placed in this magnetic field space, occurrence of Eddy Current attributed to the magnetic field is restrained or prevented. This restrains negative effects due to generation of heat. Further, since the magnetic field space formed in this antiphase resonance mode is formed on the inner circumference side of the power-supplying resonator

22 and the power-receiving resonator 32, assembling the electronic components such as the stabilizer circuit 7, the charging circuit 8, the rechargeable battery 9, and the like within this space makes the wireless power transmission apparatus 1 itself more compact, and improves the freedom in designing.

(Measurement Experiment 1)

Next, with the concept and relations described above, the following describes Measurement Experiment 1 for a variation range of the input impedance $Z_{in}$ in the wireless power transmission apparatus 1 when the transmission characteristic S21 of the wireless power transmission apparatus 1 has a single-hump characteristic, and when the transmission characteristic S21 has a double-hump characteristic.

(Measurement for Single-Hump Characteristic)

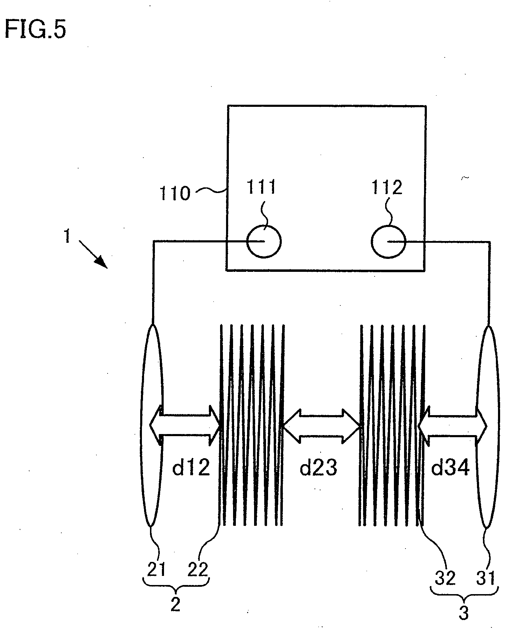

First, as a comparable subject, the input impedance Zin of the wireless power transmission apparatus 1 with its transmission characteristic S21 having the single-hump characteristic was measured. Specifically, as shown in FIG. 5, in the wireless power transmission apparatus 1 (see FIG. 3), the power-supplying coil 21 was connected to the output terminal 111 of the network analyzer 110. To the power-receiving coil 31 was connected an input terminal 112 of the network analyzer 110. Then, the transmission characteristic S21 and the input impedance $Z_{in}$ were measured by supplying power of a predetermined driving frequency to the power-supplying module 2, to supply the power from the power-supplying resonator 22 to the power-receiving resonator 32 as a magnetic field energy by means of resonance phenomenon. The measurement was conducted with a fixed distance d23 of 48 mm between the power-supplying resonator 22 and the power-receiving resonator 32, and with various distance d12 between the power-supplying coil 21 and the power-supplying resonator 22 and various distance d34 between the power-receiving coil 31 and the power-receiving resonator 32. Further, in the measurement of the transmission characteristic S21 and the input impedance Zin, the driving frequency was set to the resonance frequency at which the peak (maximum) transmission characteristic S21 occurs.

As described above, the transmission characteristic S21 of the wireless power transmission apparatus 1 is caused to exhibit the single-hump or double-hump characteristic, by varying the strength of coupling (magnetic coupling) by the magnetic field between the power-supplying module 2 and the power-receiving module 3. In the present example, to vary the magnetic field coupling, the distance d23 between the power-supplying resonator 22 and the power-receiving resonator 32 was fixed, while a combination of the distance d12 between the power-supplying coil 21 and the power-supplying resonator 22 of the power-supplying module 2 and the distance d34 between the power-receiving coil 31 and the power-receiving resonator 32 of the power-receiving module 3 was varied. When the distance d23 between the power-supplying resonator 22 and the power-receiving resonator 32 was fixed to 48 mm, the transmission characteristic S21 exhibited the single-hump characteristic when the distance d12 between the power-supplying coil 21 and the power-supplying resonator 22 and the distance d34 between the power-receiving coil 31 and the power-receiving resonator 32 were set to a value not more than 4 mm, and exhibited the double-hump characteristic when the distance d12 and the distance d34 were set to a value greater than 4 mm.

The strength of magnetic bond (magnetic field coupling) between the power-supplying module 2 and the power-receiving module 3 is also variable by means of changing the amount of power supplied to the power-supplying module 2, changing the capacity and inductance of each element (capacitor, coil) of the power-supplying resonator 22 and the power-receiving resonator 32, or changing the frequency of the power supplied to the power-supplying module 2, in addition to the method hereinabove described.

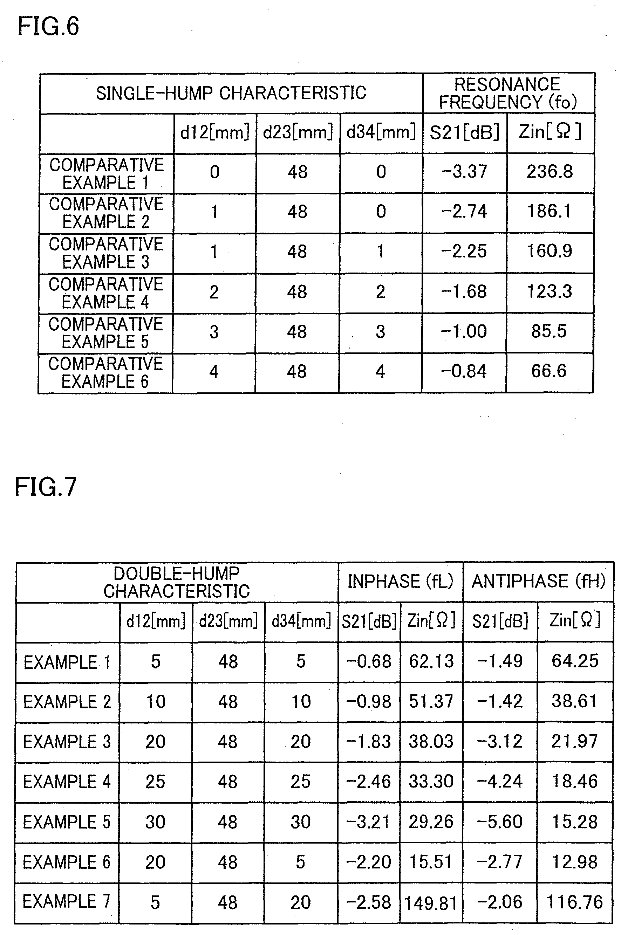

The measurement results in a case of the single-hump characteristic are shown in FIG. 6. From the measurement results shown in FIG. 6, Comparative examples 2 to 6 are the combinations of the distance d12 and the distance d34 by which the transmission characteristic S21 exhibits the single-hump characteristic, and takes a value of -3dB or higher. Further, it is understood that the range of the possible input impedance $Z_{in}$ in Comparative examples 2 to 6 is 66.6 (Comparative example 6) to 186.1 Ω (Comparative example 2). In other words, when the transmission characteristic S21 of the wireless power transmission apparatus 1 has the single-hump characteristic, the value of the input impedance Zin is adjustable within the range of 66.6 to 186.1 Ω, if the value of the transmission characteristic S21 is -3dB or higher. It should be noted that the transmission characteristic S21 being -3dB or higher is set as a condition because the value less than -3dB causes a significant decrease in the power transmission efficiency of the wireless power transmission apparatus. Therefore, the value of the transmission characteristic S21 being -3dB is a design matter, and is variable depending on the form of use.

(Measurement for Double-Hump Characteristic)

Next, as Examples, the input impedance $Z_{in}$ of the wireless power transmission apparatus 1 with its transmission characteristic S21 having the double-hump characteristic was measured. The measurement method was the same as that for the single-hump characteristic described above. The measurement was conducted with a fixed distance d23 of 48 mm between the power-supplying resonator 22 and the power-receiving resonator 32, and with various distance d12 between the power-supplying coil 21 and the power-supplying resonance 22 and various distance d34 between the power-receiving coil 31 and the power-receiving resonator 32. However, the distance d12 and the distance d34 were adjusted to be more than 4 mm so as to achieve the double-hump characteristic. Further, the driving frequency was set to a frequency fL where a peak (maximum value) on the low frequency side of the transmission characteristic S21 occurs (inphase resonance mode) and to a frequency fH where a peak on the high frequency side of the transmission characteristic S21 occurs (antiphase resonance mode). Then, the transmission characteristic S21 and the input impedance $Z_{in}$ were measured for both the frequency fL on the low frequency side (inphase resonance mode) and the frequency fH on the high frequency side (antiphase resonance mode).

The measurement results in a case of the double-hump characteristic are shown in FIG. 7. From the measurement results shown in FIG. 7, the frequency fL on the low frequency side (inphase resonance mode) in Examples 1 to 4, 6, and 7 and the frequency fH on the high frequency side (antiphase resonance mode) in Examples 1, 2, 6, and 7 are the combinations of the distance d12 and the distance d34 by which the transmission characteristic S21 exhibits the double-hump characteristic, and takes a value of -3dB or higher. Further, it is understood that the range of the possible input impedance Zinat the frequency fL on the low frequency side (inphase resonance mode) in Examples 1 to 4, 6, and 7 and at the frequency fH on the high frequency side (antiphase resonance mode) in Examples 1, 2, 6, and 7 is 12.98 (fH in Example 6) to 149.81 $\Omega$ (fL in Example 7). In other words, when the transmission characteristic S21 of the wireless power transmission apparatus 1 has the double-hump characteristic, the value of the input impedance Zin is adjustable within the range of the 12. 98 to 149. 81 $\Omega$, if the value of the transmission characteristic S21 is -3dB or higher.

Based on the above measurement results, when the transmission characteristic S21 has the single-hump characteristic, the value of the input impedance Zin is adjustable within the range (variation range) of 66.6 to 186.1 $\Omega$, if the value of the transmission characteristic S21 is -3dB or higher. On the other hand, when the transmission characteristic S21 has the double-hump characteristic, the value of the input impedance $Z_{in}$ is adjustable within the range (variation range) of 12.98 to 149.81 $\Omega$, if the value of the transmission characteristic S21 is -3dB or higher. From the above, it should be understood that the variation range of the input impedance Zin is made broader in the wireless power transmission apparatus 1 with the transmission characteristic S21 having the double-hump characteristic, as compared with the wireless power transmission apparatus 1 with the transmission characteristic S21 having the single-hump characteristic.

(Variation Range of Input Impedance $Z_{in}$, with Predetermined Transmission Characteristic S21)

Next, a variation range of the input impedance Zin of the wireless power transmission apparatus 1, when the transmission characteristic S21 of the wireless power transmission apparatus 1 has the single-hump or double-hump characteristic, and when the transmission characteristic S21 is set to a predetermined value. It should be noted that the present Comparative examples and Examples deal with cases where the predetermined value of the transmission characteristic S21 is, for example, - 2.2 dB or - 2.8 dB.

(When Transmission Characteristic S21 is Set to - 2.2 dB)

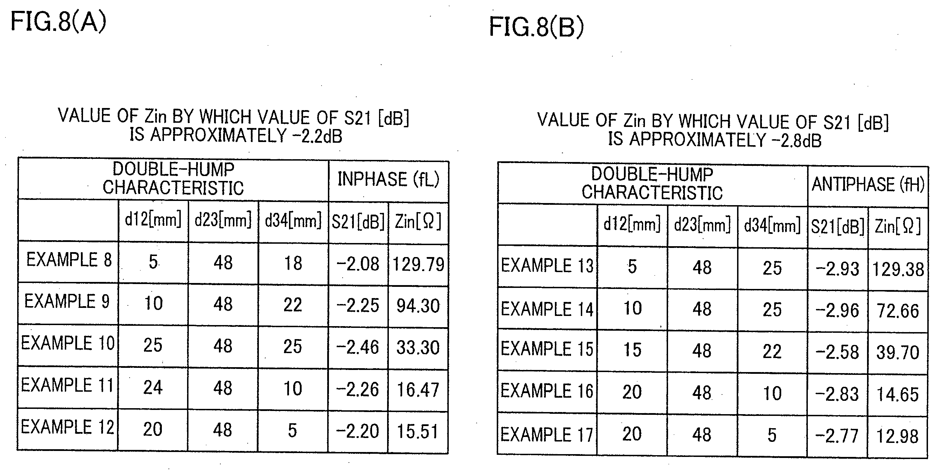

A combination of the distance d12 and the distance d34 by which the transmission characteristic S21 results in approximately - 2.2 dB is Comparative example 3 for the single-hump characteristic as shown in FIG. 6, and Examples 8 to 12 for the double-hump characteristic as shown in FIG 8(A).

In comparative example 3, the input impedance resulted in 160.9 $\Omega$ with the S21 of -2.25 dB, when the d12 = 1 mm, the d23 = 48 mm, and d34 = 1 mm. In addition to comparative example 3, in the case of single-hump characteristic, there was a combination of the distance d12 and the distance d34 at which the transmission characteristic S21 indicated - 2.2 dB. In this case, the input impedance Zin resulted approximately the same value. That is, it is understood that, when the transmission characteristic S21 of the wireless power transmission apparatus 1 has the single-hump characteristic, the input impedance Zin of the wireless power transmission apparatus 1 is almost settled on approximately 160.9 $\Omega$, when the transmission characteristic S21 is set to a predetermined value (in the present comparative example, approximately -2.2 dB).

Meanwhile, as shown in FIG. 8 (A), in Example 8, the input impedance was 129.79 $\Omega$ with the S21 of - 2.08 dB, when the distance d12 = 5 mm, d23 = 48 mm, and d34 = 18 mm, in the inphase resonance mode. Further, in Example 9, the input impedance was 94.30 $\Omega$ with the S21 of -2.25 dB, when the distance d12 = 10 mm, d23 = 48 mm, and d34 = 22 mm, in the inphase resonance mode (fL) . Further, in Example 10, the input impedance was 33.30 $\Omega$ with the S21 of -2.46 dB, when the distance d12 = 25 mm, d23 = 48 mm, and d34 = 25 mm, in the inphase resonance mode (fL). Further, in Example 11, the input impedance was 16.47 Q with the S21 of -2.26 dB, when the distance d12 = 24 mm, d23 = 48 mm, and d34 = 10 mm, in the inphase resonance mode (fL). Further, in Example 12, the input impedance was

15.51 $\Omega$ with the S21 of -2.20 dB, when the distance d12 = 20 mm, d23 = 48 mm, and d34 = 5 mm, in the inphase resonance mode (fL). From the above, it is understood that, when the transmission characteristic S21 of the wireless power transmission apparatus 1 has the double-hump characteristic, the input impedance Zin of the wireless power transmission apparatus 1 ranges from 15.51 (Example 12) to 129.79 $\Omega$ (Example 8), when the transmission characteristic S21 is set to a predetermined value (in the present examples, approximately -2.2 dB).

(When Transmission Characteristic S21 is Set to -2.8 dB)

A combination of the distance d12 and the distance d34 by which the transmission characteristic S21 results in approximately -2.8 dB is Comparative example 2 for the single-hump characteristic as shown in FIG. 6, and Examples 13 to 17 for the double-hump characteristic as shown in FIG. 8(B).

In comparative example 2, the input impedance resulted in 186.1 $\Omega$ with the S21 of -2.74 dB, when the d12 = 1 mm, the d23 = 48 mm, and d34 = 0 mm. In addition to comparative example 2, in the case of single-hump characteristic, there was a combination of the distance d12 and the distance d34 at which the transmission characteristic S21 indicated -2.8 dB. In this case, the input impedance $Z_{in}$ resulted approximately the same value. That is, it is understood that, when the transmission characteristic S21 of the wireless power transmission apparatus 1 has the single-hump characteristic, the input impedance $Z_{in}$ of the wireless power transmission apparatus 1 is almost settled on approximately 186.1 $\Omega$, when the transmission characteristic S21 is set to a predetermined value (in the present comparative example, approximately -2.8 dB).

Meanwhile, as shown in FIG. 8 (B), in Example 13, the input impedance was 129. 38 $\Omega$ with the S21 of -2.93 dB, when the distance d12 = 5 mm, d23 = 48 mm, and d34 = 25 mm, in the antiphase resonance mode (fH) . Further, in Example 14, the input impedance was 72.66 $\Omega$ with the S21 of -2.96 dB, when the distance d12 = 10 mm, d23 = 48 mm, and d34 = 25 mm, in the antiphase resonance mode (fH). Further, in Example 15, the input impedance was 39.70 $\Omega$ with the S21 of -2.58 dB, when the distance d12 = 15 mm, d23 = 48 mm, and d34 = 22 mm, in the antiphase resonance mode (fH). Further, in Example 16, the input impedance was 14.65 $\Omega$ with the S21 of -2.83 dB, when the distance d12 = 20 mm, d23 = 48 mm, and d34 = 10 mm, in the antiphase resonance mode (fH) . Further, in Example 17, the input impedance was 12.98 $\Omega$ with the S21 of -2.77 dB, when the distance d12 = 20 mm, d23 = 48 mm, and d34 = 5 mm, in the antiphase resonance mode (fH). From the above, it is understood that, when the transmission characteristic S21 of the wireless power transmission apparatus 1 has the double-hump characteristic, the input impedance $Z_{in}$ of the wireless power transmission apparatus 1 ranges from 12.98 (Example 17) to 129.38 $\Omega$ (Example 13), when the transmission characteristic S21 is set to a predetermined value (in the present examples, approximately -2.8 dB).

From the above measurement results, it should be understood that, when the transmission characteristic is set to a predetermined value, the variation range of the input impedance $Z_{in}$ is made broader in the wireless power transmission apparatus 1 with the transmission characteristic S21 having the double-hump characteristic, as compared with the wireless power transmission apparatus 1 with the transmission characteristic S21 having the single-hump characteristic.

(Measurement Experiment 2)

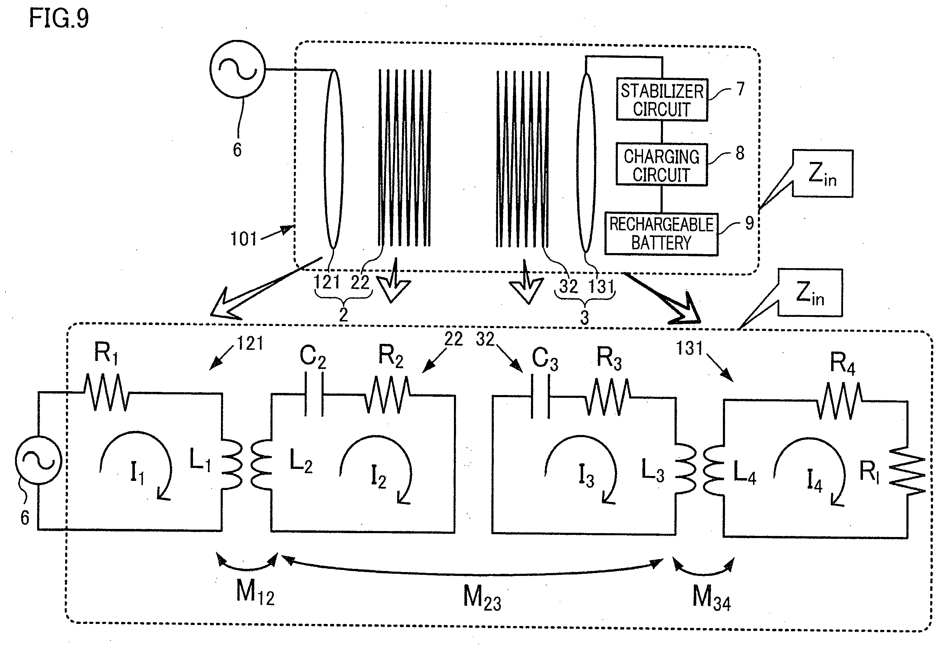

The above Measurement Experiment 1 deals with a variation range of the input impedance $Z_{in}$ in the wireless power transmission apparatus 1 shown in FIG. 3 when the transmission characteristic S21 of the wireless power transmission apparatus 1 has a single-hump characteristic, and when the transmission characteristic S21 has a double-hump characteristic. In Measurement Experiment 2 below, a wireless power transmission apparatus 101 which is the wireless power transmission apparatus 1 with modified circuit structure as shown in FIG. 9 is used for measurements. Specifically, as shown in FIG. 9, the wireless power transmission apparatus 101 has a power-supplying coil 121 and a power-receiving coil 131 which are the same as the power-supplying coil 21 and the power-receiving coil 31 of the wireless power transmission apparatus 1 except in that the capacitors $c_1$ and $c_4$ are omitted, respectively.

(Measurement Experiment 2)

The following describes Measurement Experiment 2 for a variation range of the input impedance $Z_{in}$ in the wireless power transmission apparatus 101 when the transmission characteristic S21 of the wireless power transmission apparatus 101 has a single-hump characteristic, and when the transmission characteristic S21 has a double-hump characteristic.

(Measurement for Single-Hump Characteristic)

First, as a comparable subject, the input impedance Zin of the wireless power transmission apparatus 101 with its transmission characteristic S21 having the single-hump characteristic was measured, as in the case of the Measurement Experiment 1. Specifically, in the wireless power transmission apparatus 101 (see FIG. 9), the power-supplying coil 121 was connected to the output terminal 111 of the network analyzer 110. To the power-receiving coil 131 was connected an input terminal 112 of the network analyzer 110. Then, the transmission characteristic S21 and the input impedance $Z_{in}$ were measured by supplying power of a predetermined driving frequency to the power-supplying module 2, to supply the power from the power-supplying resonator 22 to the power-receiving resonator 32 as a magnetic field energy by means of resonance phenomenon. The measurement was conducted with a fixed distance d23 of 48 mm between the power-supplying resonator 22 and the power-receiving resonator 32, and with various distance d12 between the power-supplying coil 121 and the power-supplying resonance 22 and various distance d34 between the power-receiving coil 131 and the power-receiving resonator 32. Further, in the measurement of the transmission characteristic S21 and the input impedance $Z_{in}$, the driving frequency was set to the resonance frequency at which the peak (maximum) transmission characteristic S21 occurs.

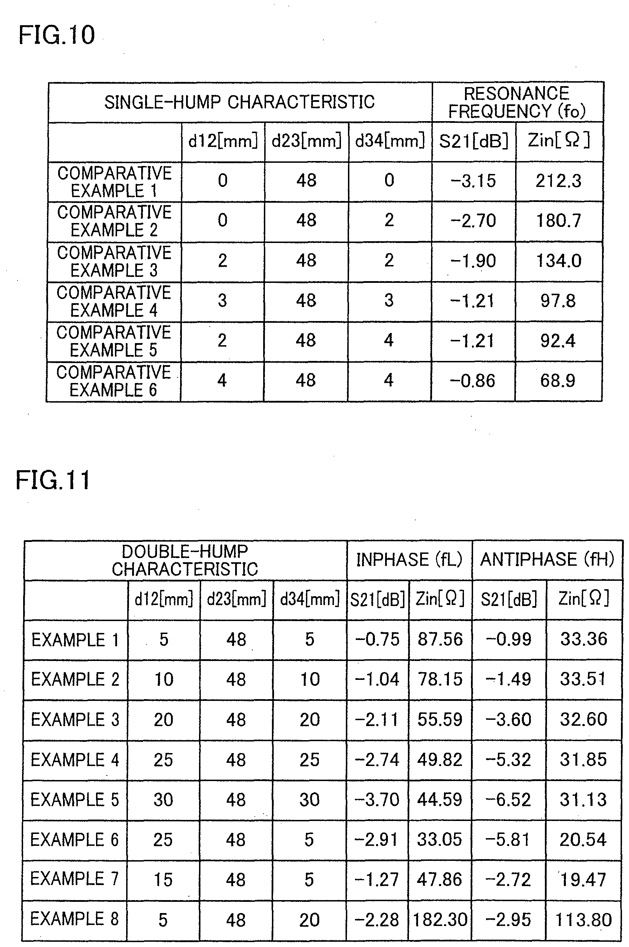

The measurement results in a case of the single-hump characteristic are shown in FIG. 10. From the measurement results shown in FIG. 10, Comparative examples 2 to 6 are the combinations of the distance d12 and the distance d34 by which the transmission characteristic S21 exhibits the single-hump characteristic, and takes a value of -3dB or higher. Further, it is understood that the range of the possible input impedance $Z_{in}$ in Comparative examples 2 to 6 is 68.9 (Comparative example 6) to 180.7 $\Omega$ (Comparative example 2). In other words, when the transmission characteristic S21 of the wireless power transmission apparatus 101 has the single-hump characteristic, the value of the input impedance $Z_{in}$ is adjustable within the range of 68.9 to 180.7 $\Omega$, if the value of the transmission characteristic S21 is -3dB or higher.

(Measurement for Double-Hump Characteristic)

Next, as Examples, the input impedance $Z_{in}$ of the wireless power transmission apparatus 101 with its transmission characteristic S21 having the double-hump characteristic was measured. The measurement method was the same as that for the single-hump characteristic described above. The measurement was conducted with a fixed distance d23 of 48 mm between the power-supplying resonator 22 and the power-receiving resonator 32, and with various distance d12 between the power-supplying coil 121 and the power-supplying resonance 22 and various distance d34 between the power-receiving coil 131 and the power-receiving resonator 32. However, the distance d12 and the distance d34 were adjusted to be more than 4 mm so as to achieve the double-hump characteristic. Further, the driving frequency was set to a frequency fL where a peak (maximum value) on the low frequency side of the transmission characteristic S21 occurs (inphase resonance mode) and to a frequency fH where a peak on the high frequency side of the transmission characteristic S21 occurs (antiphase resonance mode). Then, the transmission characteristic S21 and the input impedance $Z_{in}$ were measured for both the frequency fL on the low frequency side (inphase resonance mode) and the frequency fH on the high frequency side (antiphase resonance mode).

The measurement results in a case of the double-hump characteristic are shown in FIG. 11. From the measurement results shown in FIG. 11, the frequency fL on the low frequency side (inphase resonance mode) in Examples 1 to 4, and 6 to 8 and the frequency fH on the high frequency side (antiphase resonance mode) in Examples 1, 2, 7, and 8 are the combinations of the distance d12 and the distance d34 by which the transmission characteristic S21 exhibits the double-hump characteristic, and takes a value of -3dB or higher. Further, it is understood that the range of the possible input impedance $Z_{in}$ at the frequency fL on the low frequency side (inphase resonance mode) in Examples 1 to 4, and 6 to 8 and at the frequency fH on the high frequency side (antiphase resonance mode) in Examples 1, 2, 7, and 8 is 19.47 (fH in Example 7) to 182.30 $\Omega$ (fL in Example 8). In other words, when the transmission characteristic S21 of the wireless power transmission apparatus 101 has the double-hump characteristic, the value of the input impedance $Z_{in}$ is adjustable within the range of the 19.47 to 182.30 $\Omega$, if the value of the transmission characteristic S21 is -3dB or higher.

Based on the above measurement results, when the transmission characteristic S21 has the single-hump characteristic, the value of the input impedance $Z_{in}$ is adjustable within the range (variation range) of 68.9 to 180.7 $\Omega$, if the value of the transmission characteristic S21 is -3dB or higher. On the other hand, when the transmission characteristic S21 has the double-hump characteristic, the value of the input impedance $Z_{in}$ is adjustable within the range (variation range) of 19.47 to 182.30 $\Omega$, if the value of the transmission characteristic S21 is -3dB or higher. From the above, it should be understood that the variation range of the input impedance $Z_{in}$ is made broader in the wireless power transmission apparatus 101 with the transmission characteristic S21 having the double-hump characteristic, as compared with the wireless power transmission apparatus 101 with the transmission characteristic S21 having the single-hump characteristic.

(Variation Range of Input Impedance $Z_{in}$, with Predetermined Transmission Characteristic S21)

Next, a variation range of the input impedance $Z_{in}$ of the wireless power transmission apparatus 101, when the transmission characteristic S21 of the wireless power transmission apparatus 101 has the single-hump or double-hump characteristic, and when the transmission characteristic S21 is set to a predetermined value. It should be noted that the present Comparative examples and Examples deal with cases where the predetermined value of the transmission characteristic S21 is, for example, -2.0 dB or -2.7 dB.

(When Transmission Characteristic S21 is Set to -2.0 dB)

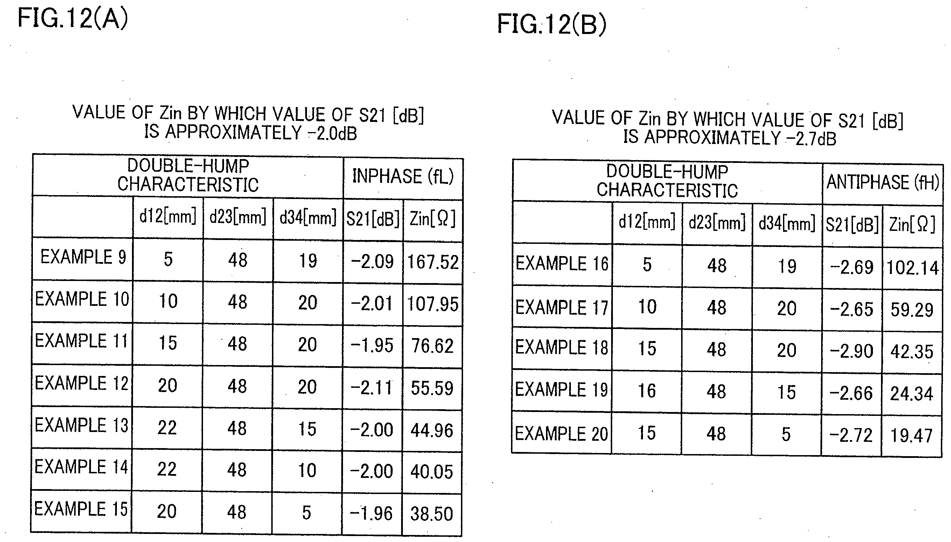

A combination of the distance d12 and the distance d34 by which the transmission characteristic S21 results in approximately -2.0 dB is Comparative example 3 for the single-hump characteristic as shown in FIG. 10, and Examples 9 to 15 for the double-hump characteristic as shown in FIG 12(A).

In comparative example 3, the input impedance resulted in 134.0 $\Omega$ with the S21 of -1.90 dB, when the d12 = 2 mm, the d23 = 48 mm, and d34 = 2 mm. In addition to comparative example 3, in the case of single-hump characteristic, there was a combination of the distance d12 and the distance d34 at which the transmission characteristic S21 indicated -2.0 dB. In this case, the input impedance $Z_{in}$ resulted approximately the same value. That is, it is understood that, when the transmission characteristic S21 of the wireless power transmission apparatus 1 has the single-hump characteristic, the input impedance $Z_{in}$ of the wireless power transmission apparatus 1 is almost settled on approximately 134. 0 $\Omega$, when the transmission characteristic S21 is set to a predetermined value (in the present comparative example, approximately -2.0 dB).

Meanwhile, as shown in FIG. 12 (A), in Example 9, the input impedance was 167. 52 $\Omega$ with the S21 of -2.09 dB, when the distance d12 = 5 mm, d23 = 48 mm, and d34 = 19 mm, in the inphase resonance mode (fL) . Further, in Example 10, the input impedance was 107.95 $\Omega$ with the S21 of -2.01 dB, when the distance d12 = 10 mm, d23 = 48 mm, and d34 = 20 mm, in the inphase resonance mode (fL) . Further, in Example 11, the input impedance was 76.62 $\Omega$ with the S21 of -1.95 dB, when the distance d12 = 15 mm, d23 = 48 mm, and d34 = 20 mm, in the inphase resonance mode (fL). Further, in Example 12, the input impedance was 55. 59 $\Omega$ with the S21 of -2.11 dB, when the distance d12 = 20 mm, d23 = 48 mm, and d34 = 20 mm, in the inphase resonance mode (fL). Further, in Example 13, the input impedance was 44. 96 $\Omega$ with the S21 of -2. 00 dB, when the distance d12 = 22 mm, d23 = 48 mm, and d34 = 15 mm, in the inphase resonance mode (fL). Further, in Example 14, the input impedance was 40.05 $\Omega$ with the S21 of -2.00 dB, when the distance d12 = 22 mm, d23 = 48 mm, and d34 = 10 mm, in the inphase resonance mode (fL) . Further, in Example 15, the input impedance was 38.50 $\Omega$ with the S21 of -1.96 dB, when the distance d12 = 20 mm, d23 = 48 mm, and d34 = 5 mm, in the inphase resonance mode (fL). From the above, it is understood that, when the transmission characteristic S21 of the wireless power transmission apparatus 101 has the double-hump characteristic, the input impedance $Z_{in}$ of the wireless power transmission apparatus 101 ranges from 38.50 (Example 15) to 167.52 (Example 9), when the transmission characteristic S21 is set to a predetermined value (in the present examples, approximately -2.0 dB).

(When Transmission Characteristic S21 is Set to -2.7 dB)

A combination of the distance d12 and the distance d34 by which the transmission characteristic S21 results in approximately -2.7 dB is Comparative example 2 for the single-hump characteristic as shown in FIG. 10, and Examples 16 to 20 for the double-hump characteristic as shown in FIG. 12(B).

In comparative example 2, the input impedance resulted in 180.7 $\Omega$ with the S21 of 2.70 dB, when the d12 = 0 mm, the d23 = 48 mm, and d34 = 2 mm. In addition to comparative example 2, in the case of single-hump characteristic, there was a combination of the distance d12 and the distance d34 at which the transmission characteristic S21 indicated -2.7 dB. In this case, the input impedance $Z_{in}$ resulted approximately the same value. That is, it is understood that, when the transmission characteristic S21 of the wireless power transmission apparatus 1 has the single-hump characteristic, the input impedance $Z_{in}$ of the wireless power transmission apparatus 1 is almost settled on approximately 180.7 $\Omega$, when the transmission characteristic S21 is set to a predetermined value (in the present comparative example, approximately -2.7 dB).

Meanwhile, as shown in FIG. 12 (B), in Example 16, the input impedance was 102.14 $\Omega$ with the S21 of -2.69 dB, when the distance d12 = 5 mm, d23 = 48 mm, and d34 = 19 mm, in the antiphase resonance mode (fH). Further, in Example 17, the input impedance was 59.29 $\Omega$ with the S21 of -2.65 dB, when the distance d12 = 10 mm, d23 = 48 mm, and d34 = 20 mm, in the antiphase resonance mode (fH). Further, in Example 18, the input impedance was 42.35 $\Omega$ with the S21 of -2.90 dB, when the distance d12 = 15 mm, d23 = 48 mm, and d34 = 20mm, in the antiphase resonance mode (fH). Further, in Example 19, the input impedance was 24.34 $\Omega$ with the S21 of -2.66 dB, when the distance d12 = 16 mm, d23 = 48 mm, and d34 = 15mm, in the antiphase resonance mode (fH) . Further, in Example 20, the input impedance was 19.47 $\Omega$ with the S21 of -2.72 dB, when the distance d12 = 15 mm, d23 = 48 mm, and d34 = 5 mm, in the antiphase resonance mode (fH). From the above, it is understood that, when the transmission characteristic S21 of the wireless power transmission apparatus 101 has the double-hump characteristic, the input impedance $Z_{in}$ of the wireless power transmission apparatus 101 ranges from 19.47 (Example 20) to 102.14 (Example 16), when the transmission characteristic S21 is set to a predetermined value (in the present examples, approximately -2.7 dB).

From the above measurement results, it should be understood that, when the transmission characteristic is set to a predetermined value, the variation range of the input impedance $Z_{in}$ is made broader in the wireless power transmission apparatus 101 with the transmission characteristic S21 having the double-hump characteristic, as compared with the wireless power transmission apparatus 101 with the transmission characteristic S21 having the single-hump characteristic.

From the above described Measurement Experiment 1 and Measurement Experiment 2, it is understood that a wireless power transmission apparatus in which the value of the transmission characteristic with respect to the power supplied to the power-supplying module 2 has a peak in a driving frequency band (fl) lower than the resonance frequency ($f_0$) and in a driving frequency band (fH) higher than the resonance frequency ($f_0$) (double-hump characteristic) provides a broader variation range of the input impedance $Z_{in}$, than a wireless power transmission apparatus in which the value of the transmission characteristic S21 with respect to the driving frequency of the power supplied to the power-supplying module 2 has one peak in the resonance frequency band ($f_0$) (single-hump characteristic) . Broadening the variation range of the input impedance $Z_{in}$ means that it is possible to set, within a wide range, the parameters, i.e., the element values of the plurality of circuit elements constituting the power-supplying module 2 and the power-receiving module 3 and the mutual inductances, as compared with a case of a single-hump characteristic. This improves the freedom in designing a wireless power transmission apparatus, and improves the portability, compactness, and cost-efficiency.

Further, by setting the driving frequency of the power supplied to the power-supplying module 2 to a band corresponding to the peak value of the transmission characteristic S21 occurring in the driving frequency band (fL) lower than the resonance frequency, the above method ensures a certain level of high transmission characteristic S21 even when the transmission characteristic S21 has the double-hump characteristic, although the transmission characteristic S21 is not as high as that ensured by matching the driving frequency with the resonance frequency in cases where the transmission characteristic S21 has a single-hump characteristic. Further, as the magnetic field occurring on the outer circumference side of the power-supplying module 2 and the magnetic field occurring on the outer circumference side of the power-receiving module 3 cancel each other out, the influence of the magnetic fields on the outer circumference sides of the power-supplying module 2 and the power-receiving module 3 is restrained, and the magnetic field space having a smaller magnetic field strength than a magnetic field strength in positions other than the outer circumference sides of the power-supplying module 2 and the power-receiving module 3 is formed. By placing, within the magnetic field space, circuits (stabilizer circuit 7, charging circuit 8, rechargeable battery 9, and the like) which should be away from the influence of the magnetic field, it is possible to efficiently utilize a space, and downsize the wireless power transmission apparatus 1 itself.

Further, by setting the driving frequency of the power supplied to the power-supplying module 2 to a band corresponding to the peak value of the transmission characteristic S21 occurring in the driving frequency band (fH) higher than the resonance frequency, the above method ensures a certain level of high transmission characteristic S21 even when the transmission characteristic S21 has the double-hump characteristic, although the transmission characteristic S21 is not as high as that ensured by matching the driving frequency with the resonance frequency in cases where the transmission characteristic S21 has a single-hump characteristic. Further, as the magnetic field occurring on the inner circumference side of the power-supplying module 2 and the magnetic field occurring on the inner circumference side of the power-receiving module 3 cancel each other out, the influence of the magnetic fields on the inner circumference sides of the power-supplying module 2 and the power-receiving module 3 is restrained, and the magnetic field space having a smaller magnetic field strength than a magnetic field strength in positions other than the inner circumference sides of the power-supplying module 2 and the power-receiving module 3 is formed. By placing, within the magnetic field space, circuits (stabilizer circuit 7, charging circuit 8, rechargeable battery 9, and the like) which should be away from the influence of the magnetic field, it is possible to efficiently utilize a space, and downsize the wireless power transmission apparatus 1 itself.

(Manufacturing Method)

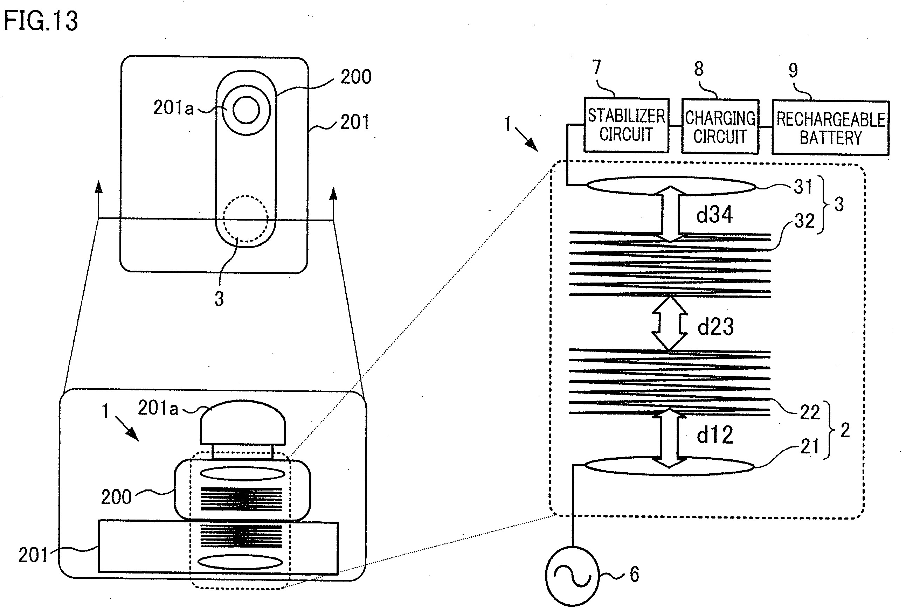

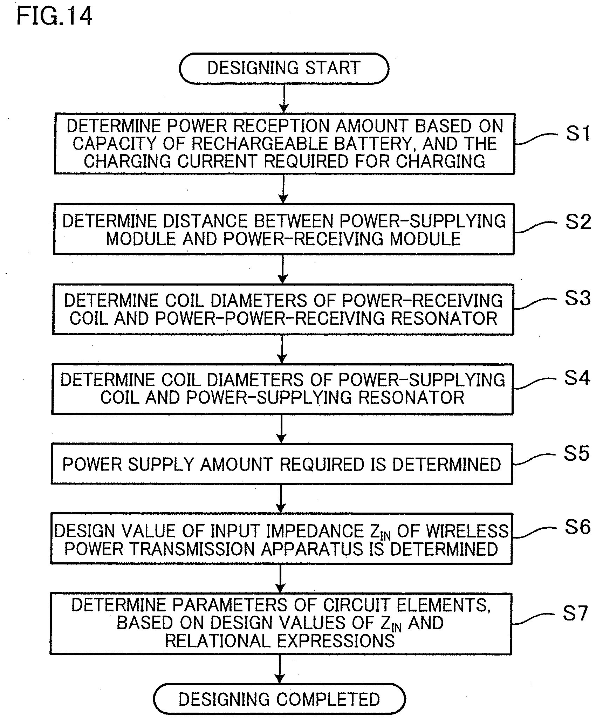

Next, the following describes with reference to FIG. 13 and FIG. 14 a design method (design process) which is a part of manufacturing process of the wireless power transmission apparatus 1. In the following description, an RF headset 200 having an earphone speaker unit 201a, and a charger 201 are described as a portable device having the wireless power transmission apparatus 1 (see FIG. 13).

The wireless power transmission apparatus 1 to be designed in the design method is mounted in an RF headset 200 and a charger 201 shown in FIG. 13, in the form of a power-receiving module 3 (a power-receiving coil 31 and a power-receiving resonator 32) and a power-supplying module 2 (a power-supplying coil 21 and a power-supplying resonator 22), respectively. For the sake of convenience, FIG. 13 illustrates the stabilizer circuit 7, the charging circuit 8, and the rechargeable battery 9 outside the power-receiving module 3; however, these are actually disposed on the inner circumference side of the solenoid power-receiving coil 31 and the power-receiving resonator 32. That is, the RF headset 200 includes the power-receiving module 3 , the stabilizer circuit 7, the charging circuit 8, and the rechargeable battery 9, and the charger 201 has a power-supplying module 2. While in use, the power-supplying coil 21 of the power-supplying module 2 is connected to an AC power source 6.

(Design Method)

First, as shown in FIG. 14, a power reception amount in the power-receiving module 3 is determined based on the capacity of the rechargeable battery 9, and the charging current required for charging the rechargeable battery 9 (S1).
Next, the distance between the power-supplying module 2 and the power-receiving module 3 is determined (S2) . The distance is the distance between the power-supplying module 2 and the power-receiving module 3, while the RF headset 200 having therein the power-receiving module 3 is placed on the charger 201 having therein the power-supplying module 2, i.e., during the charging state. To be more specific, the distance between the power-supplying module 2 and the power-receiving module 3 is determined, taking into account the shapes and the structures of the RF headset 200 and the charger 201.
Further, based on the shape and the structure of the RF headset 200, the coil diameters of the power-receiving coil 31 in the power-receiving module 3 and the coil of the power-receiving resonator 32 are determined (S3).
Further, based on the shape and the structure of the charger 201, the coil diameters of the power-supplying coil 21 in the power-supplying module 2 and the coil of the power-supplying resonator 22 are determined (S4).
Through the steps of S2 to S4, the coupling coefficient $K_{23}$ and the power transmission efficiency between the power-supplying resonator 22 (coil $L_2$) of the wireless power transmission apparatus 1 and the power-receiving resonator 32 (coil $L_3$) are determined.
Based on the power reception amount in the power-receiving module 3 determined in S1 and on the power transmission efficiency determined through S2 to S4, the minimum power supply amount required for the power-supplying module 2 is determined (S5).
Then, the design values of the input impedance $Z_{in}$ in the wireless power transmission apparatus 1 is determined, taking into account the power reception amount in the power-receiving module 3, the power transmission efficiency, and the minimum power supply amount required to the power-supplying module 2 (S6).
The design value of the input impedance $Z_{in}$ determined in S6 is applied in the above-described (Formula 3), and parameters of the circuit elements are adjusted and determined to satisfy the (Formula 3) (S7), the parameters being the resistance values, inductances, and capacities of capacitors, and coupling coefficients $K_{12}$, $K_{34}$, and the circuit elements being $R_1$, $L_1$, and $C_1$ of the RLC circuit of the power-supplying coil 21, the $R_2$, $L_2$, and $C_2$ of the RLC circuit of the power-supplying resonator 22, the $R_3$, $L_3$, and $C_3$ of the RLC circuit of the power-receiving resonator 32, and the $R_4$, $L_4$, and $C_4$ of the RLC circuit of the power-receiving coil 31.
With the above manufacturing method, it is possible to freely set element values of the circuit elements constituting the power-supplying module 2 and the power-receiving module 3, to control the input impedance $Z_{in}$. This enables a higher freedom in designing the wireless power transmission apparatus 1, and allows manufacturing of a wireless power transmission apparatus 1 with improved portability, compactness, and cost-efficiency.

(Other Embodiments)

Although the above description of the manufacturing method deals with an RF headset 200 as an example, the method is applicable to any devices having a rechargeable battery; e.g., tablet PCs, digital cameras, mobile phone phones, earphone-type music player, hearing aids, and sound collectors.
Although the above description deals with a wireless power transmission apparatus 1 configured to perform power transmission by means of magnetic coupling using a resonance phenomenon (magnetic field resonant state) between resonators (coils) provided to a power-supplying module 2 and a power-receiving module 3, the present invention is applicable to a wireless power transmission apparatus 1 configured to perform power transmission by using electromagnetic induction between coils.

Reference Signs List

1:      Wireless Power Transmission Apparatus

2:      Power-Supplying Module
3:      Power-Receiving Module
6:      AC power source
7:      Stabilizer Circuit
8:      Charging Circuit
9:      Rechargeable Battery
21:     Power-Supplying Coil
22:     Power-Supplying Resonator
31:     Power-Receiving Coil
32:     Power-Receiving Resonator
200:    RF Headset
201:    Charger

**Claims**

1.  A supply power control method for a wireless power transmission apparatus (1) configured to supply power from a power-supplying module (2) comprising at least one of each of a power-supplying coil (21) and a power-supplying resonator (22) to a power-receiving module (3) comprising at least one of each of a power-receiving resonator (32) and a power-receiving coil (31), while varying a magnetic field, wherein

    the power is supplied with a value such that a driving frequency of the power supplied to the power-supplying module (2) does not match with a resonance frequency, $f_0$, of the power-supplying module (2) and the power-receiving module (3),
    the power supplied is adjusted, by varying, as parameters, element values of a plurality of circuit elements constituting the power-supplying module (2) and the power-receiving module (3), to set the input impedance, $Z_{in}$ of the wireless power transmission apparatus (1) to be within a range of $Z_{in(MIN)}$ to $Z_{in(MAX)}$ for controlling a current, $I_{in}$, supplied to the wireless power transmission apparatus (1) to be within a proper current range of $I_{in(MIN)}$ to $I_{in(MAX)}$, to limit heat generation, the power supplied to the power-supplying module (2) is supplied by an AC power source (6) being a constant voltage power source,
    each of the power-supplying resonator (22) and the power-receiving resonator (32) includes a resistor, a coil and a capacitor as the circuit elements, and
    each of the power-supplying coil (21) and the power-receiving coil (31) includes at least a coil and a resistor as the circuit elements.

2.  The supply power control method according to claim 1, for a wireless power transmission apparatus (1) configured to supply power from a power-supplying module (2) comprising at least a power-supplying coil (21) and a power-supplying resonator (22) to a power-receiving module (3) comprising at least a power-receiving resonator (32) and a power-receiving coil (31), by means of a resonance phenomenon, wherein
    the power is supplied with a value such that a driving frequency of the power supplied to the power-supplying module (2) does not match with the resonance frequency, $f_0$, of the power-supplying module (2) and the power-receiving module (3), and
    where a total impedance of a circuit element including a coil $L_1$ and constituting the power-supplying coil (21) is $Z_1$,
    a total impedance of a circuit element including a coil $L_2$ and constituting the power-supplying resonator (22) is $Z_2$.
    a total impedance of a circuit element including a coil $L_3$ and constituting the power-power-receiving resonator (32) is $Z_3$.
    a total impedance of a circuit element including a coil $L_4$ and constituting the power-receiving coil (31) is $Z_4$,
    a total load impedance of an electronic device receiving power from the power-receiving coil (31) is $Z_l$,
    a mutual inductance between the coil $L_1$ of the power-supplying coil (21) and the coil $L_2$ of the power-supplying resonator (22) is $M_{12}$,
    a mutual inductance between the coil $L_2$ of the power-supplying resonator (22) and the coil $L_3$ of the power-receiving resonator (32) is $M_{23}$, and
    a mutual inductance between the coil $L_3$ of the power-receiving resonator (32) and the coil $L_4$ of the power-receiving coil (31) is $M_{34}$,
    the element values of the plurality of circuit elements constituting the power-supplying coil (21), the power-supplying resonator (22), the power-receiving coil (31), and the power-receiving resonator (32), and the mutual inductances are used as the parameters, and are varied to control the input impedance $Z_{in}$ of the wireless power transmission apparatus (1), which is derived from the following Equation, thereby to adjust the supplied power.

[Equation 8]

$$Z_{in} = Z_1 + \cfrac{(\omega M_{12})^2}{Z_2 + \cfrac{(\omega M_{23})^2}{Z_3 + \cfrac{(\omega M_{34})^2}{Z_4 + Z_L}}}$$

$$M_{12} = k_{12}\sqrt{L_1 L_2} \qquad M_{23} = k_{23}\sqrt{L_2 L_3} \qquad M_{34} = k_{34}\sqrt{L_3 L_4}$$

($k_{ij}$ is a coupling coefficient between $L_i$ and $L_j$)

3. The supply power control method according to claim 2, for a wireless power transmission apparatus (1), wherein the element values of a plurality of circuit elements constituting the power-supplying module (2) and the power-receiving module (3) and the mutual inductances are used as parameters, and the parameters are varied to set a value of transmission characteristic relative to a driving frequency of the power supplied to the power-supplying module, so that the characteristic has peaks in a lower drive frequency band and a higher drive frequency band than the resonance frequency, $f_0$.

4. The supply power control method according to claim 3, for a wireless power transmission apparatus (1), wherein the driving frequency of the power supplied to the power-supplying module (2) is in a band corresponding to a peak value of the transmission characteristic occurring in a driving frequency band lower than the resonance frequency, $f_0$.

5. The supply power control method according to claim 3, for a wireless power transmission apparatus (1), wherein the driving frequency of the power supplied to the power-supplying module is in a band corresponding to a peak value of the transmission characteristic occurring in a driving frequency band higher than the resonance frequency, $f_0$.

6. A wireless power transmission apparatus (1) adjusted by the supply power control method for a wireless power transmission apparatus (1) according to any one of claims 1 to 5.

7. A manufacturing method for a wireless power transmission apparatus (1) configured to supply power from a power-supplying module (2) comprising at least one of each of a power-supplying coil (21) and a power-supplying resonator (22) to a power-receiving module (3) comprising at least one of each of a power-receiving resonator (32) and a power-receiving coil (31) in such a manner that the driving frequency of the power supplied does not match with a resonance frequency, $f_0$, of the power-supplying module (2) and the power-receiving module (3), while varying a magnetic field, the method comprising:

a design process of adjusting power supplied by the wireless power transmission apparatus (1), by varying, as parameters, the element values of a plurality of circuit elements constituting the power-supplying module (2) and the power-receiving module (3), to control the input impedance, $Z_{in}$, of the wireless power transmission apparatus (1) to be within a range of $Z_{in(MIN)}$ to $Z_{in(MAX)}$ for controlling a current, $I_{in}$, supplied to the wireless power transmission apparatus (1) to be within a proper current range of $I_{in(MIN)}$ to $I_{in(MAX)}$, to limit heat generation, the power supplied to the power-supplying module (2) is supplied by an AC power source (6) being a constant voltage power source,
each of the power-supplying resonator (22) and the power-receiving resonator (32) includes a resistor, a coil and a capacitor as the circuit elements, and
each of the power-supplying coil (21) and the power-receiving coil (31) includes at least a coil and a resistor as the circuit elements.

**Patentansprüche**

1. Versorgungs-Leistungs-Steuerungs- bzw. Regelungsverfahren für eine drahtlose Leistungs-Übertragungsvorrichtung (1), konfiguriert, um Leistung aus einem Leistungsversorgungsmodul (2), das mindestens eines aus jeweils einer Leistungsversorgungsspule (21) und einem Leistungsversorgungsresonator (22) umfasst, an ein Leistungsempfangsmodul (3) bereitzustellen, das mindestens eines aus jeweils einem Leistungsempfangsresonator (32) und einer Leistungsempfangsspule (31) umfasst, während ein magnetisches Feld geändert wird, wobei die Leistung mit einem Wert bereit gestellt wird, so dass eine Antriebsfrequenz der dem Leistungsversorgungsmodul (2) bereitgestellten Leistung nicht mit einer Resonanzfrequenz $f_0$ des Leistungsversorgungsmoduls (2) und Leistungsempfangsmoduls (3) übereinstimmt,

wobei die bereitgestellte Leistung angepasst wird, indem, als Parameter, Elementwerte einer Vielzahl an Schaltelementen, die das Leistungsversorgungsmodul (2) und Leistungsempfangsmodul (3) darstellen, verändert werden, um die Eingabe-Impedanz $Z_{in}$ der drahtlosen Leistungsübertragungsvorrichtung (1) festzulegen, sich innerhalb eines Bereichs von $Z_{in(MIN)}$ bis $Z_{in(MAX)}$ zu befinden, um einen der drahtlosen Leistungsübertragungsvorrichtung (1) bereitgestellten Strom $I_{in}$ zu steuern bzw. regeln, so dass er innerhalb eines ordentlichen Strombereichs von $I_{in(MIN)}$ bis $I_{in(MAX)}$ liegt, um die Wärmeerzeugung zu begrenzen,

wobei die dem Leistungsversorgungsmodul (2) bereitgestellte Leistung durch eine AC-Leistungsquelle (6) bereitgestellt wird, die eine Konstantspannungs-Leistungsquelle ist,

wobei jeder des Leistungsversorgungsresonators (22) und Leistungsempfangsresonators (32) einen Widerstand, eine Spule und einen Kondensator als die Schaltelemente beinhaltet, und

jede der Leistungsversorgungsspule (21) und Leistungsempfangsspule (31) mindestens eine Spule und einen Widerstand als die Schaltelemente beinhaltet.

2. Versorgungs-Leistungs-Steuerungs- bzw. Regelungsverfahren nach Anspruch 1, für eine drahtlose Leistungs-Übertragungsvorrichtung (1), konfiguriert, um Leistung aus einem Leistungsversorgungsmodul (2), das mindestens eine Leistungsversorgungsspule (21) und einen Leistungsversorgungsresonator (22) umfasst, an ein Leistungsempfangsmodul (3) bereitzustellen, das mindestens einen Leistungsempfangsresonator (32) und eine Leistungsempfangsspule (31) umfasst, durch ein Resonanzphänomen, wobei die Leistung mit einem Wert bereitgestellt wird, so dass eine Antriebsfrequenz der dem Leistungsversorgungsmodul (2) bereitgestellten Leistung nicht mit einer Resonanzfrequenz $f_0$ des Leistungsversorgungsmoduls (2) und Leistungsempfangsmoduls (3) übereinstimmt,

wobei eine Gesamtimpedanz eines Schaltelements, das eine Spule $L_1$ beinhaltet und die Leistungsversorgungsspule (21) darstellt, $Z_1$ ist,

eine Gesamtimpedanz eines Schaltelements, das eine Spule $L_2$ beinhaltet und den Leistungsversorgungsresonator (22) darstellt, $Z_2$ ist,

eine Gesamtimpedanz eines Schaltelements, das eine Spule $L_3$ beinhaltet und den Leistungs-Leistungsempfangsresonator (32) darstellt, $Z_3$ ist,

eine Gesamtimpedanz eines Schaltelements, das eine Spule $L_4$ beinhaltet und die Leistungsempfangsspule (31) darstellt, $Z_4$ ist,

eine Gesamtlastimpedanz eines elektronischen Geräts, das Leistung aus der Leistungsempfangsspule (31) empfängt, $Z_l$ ist,

eine Gegeninduktivität zwischen der Spule $L_1$ der Leistungsversorgungsspule (21) und der Spule $L_2$ des Leistungsversorgungsresonators (22) $M_{12}$ ist,

eine Gegeninduktivität zwischen der Spule $L_2$ des Leistungsversorgungsresonators (22) und der Spule $L_3$ des Leistungsempfangsresonators (32) $M_{23}$ ist, und

eine Gegeninduktivität zwischen der Spule $L_3$ des Leistungsempfangsresonators (32) und der Spule $L_4$ der Leistungsempfangsspule (31) $M_{34}$ ist,

die Elementwerte der Vielzahl an Schaltelementen, die die Leistungsversorgungsspule (21), den Leistungsversorgungsresonator (22), die Leistungsempfangsspule (31) und den Leistungsempfangsresonator (32) darstellen, und die Gegeninduktivitäten als die Parameter genutzt werden, und verändert werden, um die Eingabe-Impedanz $Z_{in}$ der drahtlosen Leistungs-Übertragungsvorrichtung (1) zu steuern bzw. regeln, die aus der folgenden Gleichung abgeleitet wird, um dadurch die bereitgestellte Leistung anzupassen.

[Gleichung 8]

$$Z_{in} = Z_1 + \cfrac{(\omega M_{12})^2}{Z_2 + \cfrac{(\omega M_{23})^2}{Z_3 + \cfrac{(\omega M_{34})^2}{Z_4 + Z_L}}}$$

$$M_{12} = k_{12}\sqrt{L_1 L_2} \qquad M_{23} = k_{23}\sqrt{L_2 L_3} \qquad M_{34} = k_{34}\sqrt{L_3 L_4}$$

($k_{ij}$ ist ein Kopplungskoeffizient zwischen $L_i$ und $L_j$)

3. Versorgungs-Leistungs-Steuerungs- bzw. Regelungsverfahren nach Anspruch 2, für eine drahtlose Leistungs-Übertragungsvorrichtung (1), wobei die Elementwerte einer Vielzahl an Schaltelementen, die das Leistungsversorgungsmodul (2) und Leistungsempfangsmodul (3) darstellen, und die Gegeninduktivitäten als Parameter genutzt werden, und die Parameter verändert werden, um einen Wert der Übertragungseigenschaft relativ zu einer Antriebsfrequenz der dem Leistungsversorgungsmodul bereitgestellten Leistung festzulegen, so dass die Eigenschaft Spitzen in einem niedrigeren Antriebsfrequenzband und einem höheren Antriebsfrequenzband als die Resonanzfrequenz $f_0$ aufweist.

4. Versorgungs-Leistungs-Steuerungs- bzw. Regelungsverfahren nach Anspruch 3, für eine drahtlose Leistungs-Übertragungsvorrichtung (1), wobei die Antriebsfrequenz der dem Leistungsversorgungsmodul (2) bereitgestellten Leistung sich in einem Band befindet, das einem Spitzenwert der Übertragungseigenschaft entspricht, der in einem niedrigeren Antriebsfrequenzband als die Resonanzfrequenz $f_0$ auftritt.

5. Versorgungs-Leistungs-Steuerungs- bzw. Regelungsverfahren nach Anspruch 3, für eine drahtlose Leistungs-Übertragungsvorrichtung (1), wobei die Antriebsfrequenz der dem Leistungsversorgungsmodul bereitgestellten Leistung sich in einem Band befindet, der einem Spitzenwert der Übertragungseigenschaft entspricht, die in einem höheren Antriebsfrequenzband als die Resonanzfrequenz $f_0$ auftritt.

6. Drahtlose Leistungs-Übertragungsvorrichtung (1), angepasst durch das Versorgungs-Leistungs-Steuerungs- bzw. Regelungsverfahren für eine drahtlose Leistungs-Übertragungsvorrichtung (1) nach einem der Ansprüche 1 bis 5.

7. Herstellungsverfahren für eine drahtlose Leistungs-Übertragungsvorrichtung (1), konfiguriert, um Leistung aus einem Leistungsversorgungsmodul (2), das mindestens eines aus jeweils einer Leistungsversorgungsspule (21) und einem Leistungsversorgungsresonator (22) umfasst, an ein Leistungsempfangsmodul (3) bereitzustellen, das mindestens eines aus jeweils einem Leistungsempfangsresonator (32) und einer Leistungsempfangsspule (31) umfasst, auf eine Weise, dass die Antriebsfrequenz bereitgestellten Leistung nicht mit einer Resonanzfrequenz $f_0$ des Leistungsversorgungsmoduls (2) und Leistungsempfangsmoduls (3) übereinstimmt, während ein magnetisches Feld geändert wird, wobei das Verfahren umfasst:

einen Gestaltungsvorgang des Anpassens von Leistung, die durch die drahtlose Leistungs-Übertragungsvorrichtung (1) bereitgestellt wird, indem, als Parameter, Elementwerte einer Vielzahl an Schaltelementen, die das Leistungsversorgungsmodul (2) und Leistungsempfangsmodul (3) darstellen,
verändert werden, um die Eingabe-Impedanz $Z_{in}$ der drahtlosen Leistungsübertragungsvorrichtung (1) zu regeln bzw. steuern, um sich innerhalb eines Bereichs von $Z_{in(MIN)}$ bis $Z_{in(MAX)}$ zu befinden, um einen der drahtlosen Leistungsübertragungsvorrichtung (1) bereitgestellten Strom $I_{in}$ zu steuern bzw. regeln, so dass er innerhalb eines ordentlichen Strombereichs von $I_{in(MIN)}$ bis $I_{in(MAX)}$ liegt, um die Wärmeerzeugung zu begrenzen,
wobei die dem Leistungsversorgungsmodul (2) bereitgestellte Leistung durch eine AC-Leistungsquelle (6) bereitgestellt wird, die eine Konstantspannungs-Leistungsquelle ist,

wobei jeder des Leistungsversorgungsresonators (22) und Leistungsempfangsresonators (32) einen Widerstand, eine Spule und einen Kondensator als die Schaltelemente beinhaltet, und
jede der Leistungsversorgungsspule (21) und Leistungsempfangsspule (31) mindestens eine Spule und einen Widerstand als die Schaltelemente beinhaltet.

**Revendications**

1. Procédé de commande d'alimentation électrique pour un appareil de transmission de puissance sans fil (1) configuré pour fournir de la puissance d'un module de fourniture de puissance (2) comprenant au moins un élément parmi chacun d'une bobine de fourniture de puissance (21) et d'un résonateur de fourniture de puissance (22) à un module de réception de puissance (3) comprenant au moins un élément parmi chacun d'un résonateur de réception de puissance (32) et d'une bobine de réception de puissance (31), tout en faisant varier un champ magnétique, dans lequel
la puissance est fournie avec une valeur telle qu'une fréquence d'excitation de la puissance fournie au module de fourniture de puissance (2) ne correspond pas à une fréquence de résonance, $f_0$, du module de fourniture de puissance (2) et du module de réception de puissance (3),
la puissance fournie est ajustée en faisant varier comme paramètres des valeurs d'élément d'une pluralité d'éléments de circuit constituant le module de fourniture de puissance (2) et le module de réception de puissance (3), pour régler l'impédance d'entrée, $Z_{in}$, de l'appareil de transmission de puissance sans fil (1) devant être au sein d'une plage de $Z_{in(MIN)}$ à $Z_{in(MAX)}$ pour commander un courant, $I_{in}$, fourni à l'appareil de transmission de puissance sans fil (1) devant être au sein d'une plage de courant appropriée de $I_{in(MIN)}$ à $I_{in(MAX)}$, pour limiter la génération de chaleur,
la puissance fournie au module de fourniture de puissance (2) est fournie par une source de puissance CA (6) qui est une source de puissance à tension constante, chacun du résonateur de fourniture de puissance (22) et du résonateur de réception de puissance (32) inclut une résistance, une bobine et un condensateur comme les éléments de circuit, et
chacune de la bobine de fourniture de puissance (21) et de la bobine de réception de puissance (31) inclut au moins une bobine et une résistance comme les éléments de circuit.

2. Procédé de commande d'alimentation électrique selon la revendication 1, pour un appareil de transmission de puissance sans fil (1) configuré pour fournir de la puissance d'un module de fourniture de puissance (2) comprenant au moins une bobine de fourniture de puissance (21) et un résonateur de fourniture de puissance (22) à un module de réception de puissance (3) comprenant au moins un résonateur de réception de puissance (32) et une bobine de réception de puissance (31), au moyen d'un phénomène de résonance, dans lequel la puissance est fournie avec une valeur telle qu'une fréquence d'excitation de la puissance fournie au module de fourniture de puissance (2) ne correspond pas à la fréquence de résonance, $f_0$, du module de fourniture de puissance (2) et du module de réception de puissance (3), et
où une impédance totale d'un élément de circuit incluant une bobine $L_1$ et constituant la bobine de fourniture de puissance (21) est $Z_1$,
une impédance totale d'un élément de circuit incluant une bobine $L_2$ et constituant le résonateur de fourniture de puissance (22) est $Z_2$,
une impédance totale d'un élément de circuit incluant une bobine $L_3$ et constituant le résonateur de réception de puissance (32) est $Z_3$,
une impédance totale d'un élément de circuit incluant une bobine $L_4$ et constituant la bobine de réception de puissance (31) est $Z_4$,
une impédance de charge totale d'un dispositif électronique recevant de la puissance de la bobine de réception de puissance (31) est $Z_1$,
une inductance mutuelle entre la bobine $L_1$ de la bobine de fourniture de puissance (21) et la bobine $L_2$ du résonateur de fourniture de puissance (22) est $M_{12}$,
une inductance mutuelle entre la bobine $L_2$ du résonateur de fourniture de puissance (22) et la bobine $L_3$ du résonateur de réception de puissance (32) est $M_{23}$, et
une inductance mutuelle entre la bobine $L_3$ du résonateur de réception de puissance (32) et la bobine $L_4$ de la bobine de réception de puissance (31) est $M_{34}$,
les valeurs d'élément de la pluralité d'éléments de circuit constituant la bobine de fourniture de puissance (21), le résonateur de fourniture de puissance (22), la bobine de réception de puissance (31) et le résonateur de réception de puissance (32), et les inductances mutuelles sont utilisées comme les paramètres et sont variées pour commander l'impédance d'entrée $Z_{in}$ de l'appareil de transmission de puissance sans fil (1) qui est dérivée de l'Equation suivante, pour ajuster de ce fait la puissance fournie,

[Equation 8]

$$Z_{in} = Z_1 + \cfrac{(\omega M_{12})^2}{Z_2 + \cfrac{(\omega M_{23})^2}{Z_3 + \cfrac{(\omega M_{34})^2}{Z_4 + Z_L}}}$$

$$M_{12} = k_{12}\sqrt{L_1 L_2} \qquad M_{23} = k_{23}\sqrt{L_2 L_3} \qquad M_{34} = k_{34}\sqrt{L_3 L_4}$$

($k_{ij}$ est un coefficient de couplage entre $L_i$ et $Lj$).

3. Procédé de commande d'alimentation électrique selon la revendication 2, pour un appareil de transmission de puissance sans fil (1), dans lequel les valeurs d'élément d'une pluralité d'éléments de circuit constituant le module de fourniture de puissance (2) et le module de réception de puissance (3), et les inductances mutuelles sont utilisées comme paramètres, et les paramètres sont variés pour régler une valeur de caractéristique de transmission concernant une fréquence d'excitation de la puissance fournie au module de fourniture de puissance de sorte que la caractéristique a des crêtes dans une bande de fréquence d'excitation inférieure et une bande de fréquence d'excitation supérieure à la fréquence de résonance, $f_0$.

4. Procédé de commande d'alimentation électrique selon la revendication 3, pour un appareil de transmission de puissance sans fil (1), dans lequel la fréquence d'excitation de la puissance fournie au module de fourniture de puissance (2) est dans une bande correspondant à une valeur de crête de la caractéristique de transmission se produisant dans une bande de fréquence d'excitation inférieure à la fréquence de résonance, $f_0$.

5. Procédé de commande d'alimentation électrique selon la revendication 3, pour un appareil de transmission de puissance sans fil (1), dans lequel la fréquence d'excitation de la puissance fournie au module de fourniture de puissance (2) est dans une bande correspondant à une valeur de crête de la caractéristique de transmission se produisant dans une bande de fréquence d'excitation supérieure à la fréquence de résonance, $f_0$.

6. Appareil de transmission de puissance sans fil (1) ajusté par le procédé de commande d'alimentation électrique pour un appareil de transmission de puissance sans fil (1) selon l'une quelconque des revendications 1 à 5.

7. Procédé de fabrication pour un appareil de transmission de puissance sans fil (1) configuré pour fournir de la puissance d'un module de fourniture de puissance (2) comprenant au moins un élément parmi chacun d'une bobine de fourniture de puissance (21) et d'un résonateur de fourniture de puissance (22) à un module de réception de puissance (3) comprenant au moins un élément parmi chacun d'un résonateur de réception de puissance (32) et d'une bobine de réception de puissance (31) de telle sorte que la fréquence d'excitation de la puissance fournie ne correspond pas à une fréquence de résonance, $f_0$, du module de fourniture de puissance (2) et du module de réception de puissance (3), tout en faisant varier un champ magnétique, le procédé comprenant :

un processus de conception consistant à ajuster de la puissance fournie par l'appareil de transmission de puissance sans fil (1) en faisant varier comme paramètres les valeurs d'élément d'une pluralité d'éléments de circuit constituant le module de fourniture de puissance (2) et le module de réception de puissance (3), pour commander l'impédance d'entrée, $Z_{in}$, de l'appareil de transmission de puissance sans fil (1) devant être au sein d'une plage de $Z_{in(MIN)}$ à $Z_{in(MAX)}$ pour commander un courant, $I_{in}$, fourni à l'appareil de transmission de puissance sans fil (1) devant être au sein d'une plage de courant appropriée de $I_{in(MIN)}$ à $I_{in(MAX)}$, pour limiter la génération de chaleur,
la puissance fournie au module de fourniture de puissance (2) est fournie par une source de puissance CA (6) qui est une source de puissance à tension constante, chacun du résonateur de fourniture de puissance (22) et du résonateur de réception de puissance (32) inclut une résistance, une bobine et un condensateur comme les éléments de circuit, et

chacune de la bobine de fourniture de puissance (21) et de la bobine de réception de puissance (31) inclut au moins une bobine et une résistance comme les éléments de circuit.

# FIG.1

$$I_{in} = V_{in} / Z_{in}$$

FIG.2

EP 2 958 212 B1

FIG.3

FIG.4

FIG.5

## FIG.6

| SINGLE-HUMP CHARACTERISTIC | | | | RESONANCE FREQUENCY (fo) | |
|---|---|---|---|---|---|
| | d12[mm] | d23[mm] | d34[mm] | S21[dB] | Zin[Ω] |
| COMPARATIVE EXAMPLE 1 | 0 | 48 | 0 | −3.37 | 236.8 |
| COMPARATIVE EXAMPLE 2 | 1 | 48 | 0 | −2.74 | 186.1 |
| COMPARATIVE EXAMPLE 3 | 1 | 48 | 1 | −2.25 | 160.9 |
| COMPARATIVE EXAMPLE 4 | 2 | 48 | 2 | −1.68 | 123.3 |
| COMPARATIVE EXAMPLE 5 | 3 | 48 | 3 | −1.00 | 85.5 |
| COMPARATIVE EXAMPLE 6 | 4 | 48 | 4 | −0.84 | 66.6 |

## FIG.7

| DOUBLE-HUMP CHARACTERISTIC | | | INPHASE (fL) | | ANTIPHASE (fH) | |
|---|---|---|---|---|---|---|
| | d12[mm] | d23[mm] | d34[mm] | S21[dB] | Zin[Ω] | S21[dB] | Zin[Ω] |
| EXAMPLE 1 | 5 | 48 | 5 | −0.68 | 62.13 | −1.49 | 64.25 |
| EXAMPLE 2 | 10 | 48 | 10 | −0.98 | 51.37 | −1.42 | 38.61 |
| EXAMPLE 3 | 20 | 48 | 20 | −1.83 | 38.03 | −3.12 | 21.97 |
| EXAMPLE 4 | 25 | 48 | 25 | −2.46 | 33.30 | −4.24 | 18.46 |
| EXAMPLE 5 | 30 | 48 | 30 | −3.21 | 29.26 | −5.60 | 15.28 |
| EXAMPLE 6 | 20 | 48 | 5 | −2.20 | 15.51 | −2.77 | 12.98 |
| EXAMPLE 7 | 5 | 48 | 20 | −2.58 | 149.81 | −2.06 | 116.76 |

# FIG.8(A)

VALUE OF Zin BY WHICH VALUE OF S21 [dB]
IS APPROXIMATELY −2.2dB

| | DOUBLE−HUMP CHARACTERISTIC | | | INPHASE (fL) | |
|---|---|---|---|---|---|
| | d12[mm] | d23[mm] | d34[mm] | S21[dB] | Zin[Ω] |
| EXAMPLE 8 | 5 | 48 | 18 | −2.08 | 129.79 |
| EXAMPLE 9 | 10 | 48 | 22 | −2.25 | 94.30 |
| EXAMPLE 10 | 25 | 48 | 25 | −2.46 | 33.30 |
| EXAMPLE 11 | 24 | 48 | 10 | −2.26 | 16.47 |
| EXAMPLE 12 | 20 | 48 | 5 | −2.20 | 15.51 |

# FIG.8(B)

VALUE OF Zin BY WHICH VALUE OF S21 [dB]
IS APPROXIMATELY −2.8dB

| | DOUBLE−HUMP CHARACTERISTIC | | | ANTIPHASE (fH) | |
|---|---|---|---|---|---|
| | d12[mm] | d23[mm] | d34[mm] | S21[dB] | Zin[Ω] |
| EXAMPLE 13 | 5 | 48 | 25 | −2.93 | 129.38 |
| EXAMPLE 14 | 10 | 48 | 25 | −2.96 | 72.66 |
| EXAMPLE 15 | 15 | 48 | 22 | −2.58 | 39.70 |
| EXAMPLE 16 | 20 | 48 | 10 | −2.83 | 14.65 |
| EXAMPLE 17 | 20 | 48 | 5 | −2.77 | 12.98 |

EP 2 958 212 B1

FIG.9

## FIG.10

| SINGLE-HUMP CHARACTERISTIC | | | | RESONANCE FREQUENCY (fo) | |
|---|---|---|---|---|---|
| | d12[mm] | d23[mm] | d34[mm] | S21[dB] | Zin[Ω] |
| COMPARATIVE EXAMPLE 1 | 0 | 48 | 0 | −3.15 | 212.3 |
| COMPARATIVE EXAMPLE 2 | 0 | 48 | 2 | −2.70 | 180.7 |
| COMPARATIVE EXAMPLE 3 | 2 | 48 | 2 | −1.90 | 134.0 |
| COMPARATIVE EXAMPLE 4 | 3 | 48 | 3 | −1.21 | 97.8 |
| COMPARATIVE EXAMPLE 5 | 2 | 48 | 4 | −1.21 | 92.4 |
| COMPARATIVE EXAMPLE 6 | 4 | 48 | 4 | −0.86 | 68.9 |

## FIG.11

| DOUBLE-HUMP CHARACTERISTIC | | | | INPHASE (fL) | | ANTIPHASE (fH) | |
|---|---|---|---|---|---|---|---|
| | d12[mm] | d23[mm] | d34[mm] | S21[dB] | Zin[Ω] | S21[dB] | Zin[Ω] |
| EXAMPLE 1 | 5 | 48 | 5 | −0.75 | 87.56 | −0.99 | 33.36 |
| EXAMPLE 2 | 10 | 48 | 10 | −1.04 | 78.15 | −1.49 | 33.51 |
| EXAMPLE 3 | 20 | 48 | 20 | −2.11 | 55.59 | −3.60 | 32.60 |
| EXAMPLE 4 | 25 | 48 | 25 | −2.74 | 49.82 | −5.32 | 31.85 |
| EXAMPLE 5 | 30 | 48 | 30 | −3.70 | 44.59 | −6.52 | 31.13 |
| EXAMPLE 6 | 25 | 48 | 5 | −2.91 | 33.05 | −5.81 | 20.54 |
| EXAMPLE 7 | 15 | 48 | 5 | −1.27 | 47.86 | −2.72 | 19.47 |
| EXAMPLE 8 | 5 | 48 | 20 | −2.28 | 182.30 | −2.95 | 113.80 |

## FIG.12(A)

VALUE OF Zin BY WHICH VALUE OF S21 [dB] IS APPROXIMATELY -2.0dB

| | DOUBLE-HUMP CHARACTERISTIC | | | INPHASE (fL) | |
|---|---|---|---|---|---|
| | d12[mm] | d23[mm] | d34[mm] | S21[dB] | Zin[Ω] |
| EXAMPLE 9 | 5 | 48 | 19 | -2.09 | 167.52 |
| EXAMPLE 10 | 10 | 48 | 20 | -2.01 | 107.95 |
| EXAMPLE 11 | 15 | 48 | 20 | -1.95 | 76.62 |
| EXAMPLE 12 | 20 | 48 | 20 | -2.11 | 55.59 |
| EXAMPLE 13 | 22 | 48 | 15 | -2.00 | 44.96 |
| EXAMPLE 14 | 22 | 48 | 10 | -2.00 | 40.05 |
| EXAMPLE 15 | 20 | 48 | 5 | -1.96 | 38.50 |

## FIG.12(B)

VALUE OF Zin BY WHICH VALUE OF S21 [dB] IS APPROXIMATELY -2.7dB

| | DOUBLE-HUMP CHARACTERISTIC | | | ANTIPHASE (fH) | |
|---|---|---|---|---|---|
| | d12[mm] | d23[mm] | d34[mm] | S21[dB] | Zin[Ω] |
| EXAMPLE 16 | 5 | 48 | 19 | -2.69 | 102.14 |
| EXAMPLE 17 | 10 | 48 | 20 | -2.65 | 59.29 |
| EXAMPLE 18 | 15 | 48 | 20 | -2.90 | 42.35 |
| EXAMPLE 19 | 16 | 48 | 15 | -2.66 | 24.34 |
| EXAMPLE 20 | 15 | 48 | 5 | -2.72 | 19.47 |

FIG.13

EP 2 958 212 B1

FIG.14

```
         ( DESIGNING START )
                 │
                 ▼
┌─────────────────────────────────────────────┐
│ DETERMINE POWER RECEPTION AMOUNT BASED ON    │      S1
│ CAPACITY OF RECHARGEABLE BATTERY, AND THE    │
│ CHARGING CURRENT REQUIRED FOR CHARGING       │
└─────────────────────────────────────────────┘
                 │
                 ▼
┌─────────────────────────────────────────────┐
│ DETERMINE DISTANCE BETWEEN POWER-SUPPLYING   │      S2
│ MODULE AND POWER-RECEIVING MODULE            │
└─────────────────────────────────────────────┘
                 │
                 ▼
┌─────────────────────────────────────────────┐
│ DETERMINE COIL DIAMETERS OF POWER-RECEIVING  │      S3
│ COIL AND POWER-POWER-RECEIVING RESONATOR     │
└─────────────────────────────────────────────┘
                 │
                 ▼
┌─────────────────────────────────────────────┐
│ DETERMINE COIL DIAMETERS OF POWER-SUPPLYING  │      S4
│ COIL AND POWER-SUPPLYING RESONATOR           │
└─────────────────────────────────────────────┘
                 │
                 ▼
┌─────────────────────────────────────────────┐
│ POWER SUPPLY AMOUNT REQUIRED IS DETERMINED   │      S5
└─────────────────────────────────────────────┘
                 │
                 ▼
┌─────────────────────────────────────────────┐
│ DESIGN VALUE OF INPUT IMPEDANCE Z_IN OF      │      S6
│ WIRELESS POWER TRANSMISSION APPARATUS IS     │
│ DETERMINED                                   │
└─────────────────────────────────────────────┘
                 │
                 ▼
┌─────────────────────────────────────────────┐
│ DETERMINE PARAMETERS OF CIRCUIT ELEMENTS,    │      S7
│ BASED ON DESIGN VALUES OF Z_IN AND           │
│ RELATIONAL EXPRESSIONS                       │
└─────────────────────────────────────────────┘
                 │
                 ▼
         ( DESIGNING COMPLETED )
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4624768 B
- JP 2010239769 A
- JP 2011050140 A
- JP 2012182975 A
- US 2011127846 A1
- US 2012146424 A1